# EUROPEAN PATENT SPECIFICATION

(11) **EP 2 821 450 B1**
(45) Date of publication and mention of the grant of the patent: **25.10.2017**
(21) Application number: 13754012.6
(22) Date of filing: 27.02.2013
(51) Int. Cl.: C09D 201/00, C09D 5/00, C09D 5/16, C09D 7/12, C09D 133/00, C09D 183/02, C09D 183/04

(54) **COATING COMPOSITION AND COATING FILM OBTAINED FROM COATING COMPOSITION**
BESCHICHTUNGSZUSAMMENSETZUNG UND BESCHICHTUNGSFILM AUS DER BESCHICHTUNGSZUSAMMENSETZUNG
COMPOSITION DE REVÊTEMENT ET FILM DE REVÊTEMENT OBTENU À PARTIR DE LA COMPOSITION DE REVÊTEMENT

(30) Priority: 28.02.2012 JP 2012041239
(43) Date of publication of application: 07.01.2015
(73) Proprietor: Kaneka Corporation, Osaka-shi, Osaka 530-8288 (JP)
(72) Inventor: FUKAUMI, Hiroki, Takasago-shi Hyogo 676-8688 (JP); HAMAMURA, Takahiro, Settsu-shi Osaka 566-0072 (JP); SONODA, Takeshi, Takasago-shi Hyogo 676-8688 (JP)
(74) Representative: Hart-Davis, Jason
(86) International application number: PCT/JP2013/055176
(87) International publication number: WO 2013/129488

(56) References cited:
- EP-A1- 1 736 516
- WO-A1-2009/118590
- JP-A- 2007 084 678
- JP-A- 2010 280 852
- US-A1- 2005 266 248
- US-A1- 2005 266 981

## Description

### TECHNICAL FIELD

The present invention relates to aqueous heat-shielding coating materials that can be suitably used for the coating of various objects, such as architecture, structures, building materials, ships, metal products, road vehicles, electric machines, machines, and wood products. Specifically, the present invention relates to aqueous heat-shielding coating materials that form a hydrophilic surface, thereby resulting in little reduction in heat-shielding properties.

### BACKGROUND ART

In the field of coating materials as well, there has been a recent attempt to switch materials containing organic solvents to water-soluble or water-dispersible resins from the viewpoint of pollution control or resources saving. However, conventional aqueous coating materials tend to have inferior coating properties to solvent-based coating materials. Under such circumstances, aqueous coating materials are also required to have coating properties equivalent to those of solvent-based coating materials. Especially, there is a need to impart to them high levels of properties (e.g. stain resistance).

Meanwhile, in summer, when roads and buildings are irradiated with sunlight in the daytime, they absorb energies of sunlight and increase in temperature, and then release heat at night. This is thought to contribute to the so-called heat island phenomenon in which the temperature in metropolitan areas is comparatively higher than that in the suburbs. To prevent this phenomenon, the use of heat-shielding coating materials is being considered as a measure to prevent a temperature rise on roads and buildings, especially on rooftops, by reflecting infrared rays present in sunlight. Solar reflectance is an index of the rate of temperature rise. A higher infrared reflectance means a higher solar reflectance, which is, in turn, more effective for suppressing a temperature rise.

Common coating materials contain pigments having a low infrared reflectance (e.g., carbon black, black iron oxide) to adjust the color. However, since these pigments easily absorb infrared rays, it is pointed out that structures (e.g. buildings) or roads to which these coating materials are applied increase in temperature by absorbing infrared rays, possibly contributing to the above-mentioned heat island phenomenon.

For use in coating materials mainly including vehicles and pigments, a proposed measure to solve such a problem is a solar heat-shielding coating composition containing a solar heat-shielding pigment with a particle size of 50 µm or less in an amount of 2 to 60% by weight based on coating solids (see Patent Literature 1).

Also proposed is a solar heat-shielding coating composition toned to black (achromatic color) by additive color mixing using two or more kinds of pigments selected from red, orange, yellow, green, blue, and violet pigments having a particle size of 50 µm or less and a high solar radiation reflectance in the near-infrared range (see Patent Literature 2).

Further proposed is a quick-drying aqueous heat-shielding coating composition that includes a quick-drying aqueous resin composition and one or two or more kinds of infrared reflective pigments and forms a coating film having a solar reflectance of 30% or higher in a wavelength range from 350 to 2100 nm (see Patent Literature 3).

### CITATION LIST

### PATENT LITERATURE

Patent Literature 1: JP-A H01-121371
Patent Literature 2: JP-A H04-255769
Patent Literature 3: JP-A H01-121371

Liquid compositions are disclosed in US 2005/0266981 A1 that include a photocatalytic material and a hydrophilic binder that includes an essentially completely hydrolyzed organosilicate, and substrates coated with such compositions.

A resin composition for paints of WO 2009/118590 A1 contains (A) hydroxyl group containing acrylic resin, (B) hexakisalkyoxymethylated melamine resin, (C) de-watering agent, (D) blocked sulfonic acid compound, (E) silicate compound and (F) at least one type of material selected from among (a) organic resin particles of average particle diameter not more than 40 µm, (b) inorganic glass particles of average particle diameter not more than 100 µm and (c) inorganic fibers of average length not more than 300 µm.

According to US 2005/0266248 A1, a layer is deposited from at least one liquid composition that includes (i) a photocatalytic material and (ii) an binder that is hydrophilic and comprises an essentially completely hydrolyzed organosilicate.

A coating composition of EP 1 736 516 A1 comprises a hydrophilic material (A), a hydrophobic polymer (B) for a coating, an organic solvent (C) for the hydrophobic polymer for a coating and another organic solvent (D); said other organic solvent (D) being a high boiling point organic solvent having a boiling point higher than that of the organic solvent (C) for the hydrophobic polymer or a coating by 5 °C or more.

### SUMMARY OF INVENTION

### TECHNICAL PROBLEM

The heat-shielding coating materials disclosed in Patent Literatures 1 to 3, however, are provided without considering the reduction in heat-shielding properties caused by staining. Especially under recent circumstances in metropolitan and near metropolitan areas, oily contaminants derived from exhaust gases discharged from vehicles and the like are floating in the air. These contaminants have a very high ability to absorb infrared rays present in sunlight. Therefore, the contaminants adhered to the surface of a coating film formed from a heat-shielding coating material function as a heat storage, possibly impairing the original heat-shielding function of the heat-shielding coating material and causing a temperature rise of the coating film.

The present invention aims to provide an aqueous heat-shielding coating material to which low staining properties are imparted to suppress adhesion of contaminants in the air and thereby maintain the heat-shielding properties.

### SOLUTION TO PROBLEM

The present invention is defined in the claims.

### ADVANTAGEOUS EFFECTS OF INVENTION

A resin composition for an aqueous coating material of the present invention can be used to produce a coating material that has heat-shielding properties comparable to conventional heat-shielding coating materials and also shows little reduction in heat-shielding properties even after long-term outdoor exposure.

### DESCRIPTION OF EMBODIMENTS

The present invention is described in detail below by reference to embodiments.

### [(A1) Water-soluble and/or water-dispersible resin]

The (A1) water-soluble and/or water-dispersible resin is not particularly limited as long as it is capable of forming a coating film, and conventionally known ones may be used. Specific examples thereof include, but not limited to, acrylic resin emulsions, acrylic silicone resin emulsions, urethane resin emulsions, fluororesin emulsions, epoxy resin emulsions, polyester resin emulsions, alkyd resin emulsions, and melamine resin emulsions. These may be used alone or in combination of two or more. In terms of, for example, weather resistance of the formed coating film, preferred among these resins is at least one selected from the group consisting of acrylic resin emulsions, acrylic silicone resin emulsions, fluororesin emulsions, and urethane resin emulsions.

Those obtained by radical copolymerization of an acrylic monomer with a monomer copolymerizable with the acrylic monomer may be used as the acrylic resin emulsion.

The monomers that can be used are not particularly limited, and specific examples thereof include: (meth) acrylate monomers such as methyl(meth)acrylate, ethyl(meth)acrylate, n-butyl (meth)acrylate, iso-butyl (meth)acrylate, tert-butyl (meth)acrylate, benzyl (meth)acrylate, cyclohexyl (meth)acrylate, 2-ethylhexyl (meth)acrylate, isodecyl (meth)acrylate, lauryl (meth)acrylate, tridecyl (meth)acrylate, stearyl (meth)acrylate, and iso-bornyl (meth)acrylate; aromatic hydrocarbon vinyl monomers such as styrene, α-methylstyrene, chlorostyrene, 4-hydroxystyrene, and vinyltoluene; vinyl esters and allyl compounds such as vinyl acetate, vinyl propionate, and diallyl phthalate; nitrile group-containing vinyl monomers such as (meth)acrylonitrile; epoxy group-containing vinyl monomers such as glycidyl (meth)acrylate; hydroxy group-containing vinyl monomers such as 2-hydroxypropyl (meth)acrylate, 2-hydroxyethyl (meth)acrylate, 2-hydroxyethyl vinyl ether, hydroxystyrene, ARONIX 5700 (available from TOAGOSEI CO., LTD.), placcel FA-1, placcel FA-4, placcel FM-1, and placcel FM-4 (these four are available from Daicel Corporation), HE-10, HE-20, HP-10, and HP-20 (these four are available from NIPPON SHOKUBAI CO., LTD.), BLEMMER PEP series, BLEMMER NKH-5050, and BLEMMER GLM (these three are available from NOF CORPORATION), and hydroxy group-containing vinyl types, modified hydroxyalkyl vinyl monomers; compounds such as AS-6, AN-6, AA-6, AB-6, and AK-5 which are macromonomers available from TOAGOSEI CO., LTD. ; and vinyl methyl ether, propylene, and butadiene.

Moreover, hydrophilic vinyl monomers that can improve the stability of emulsions may also be used. Examples of hydrophilic group-containing vinyl monomers that can be used include sodium styrene sulfonate, sodium 2-sulfoethyl methacrylate, ammonium 2-sulfoethyl methacrylate, and polyoxyalkylene chain-containing vinyl monomers.

In particular, a polyoxyalkylene chain-containing vinyl monomer works synergistically with (B1) an organosilicate and/or a modified product thereof, which are described later, to greatly improve stain resistance.

The polyoxyalkylene chain-containing vinyl monomer is not limited, and may preferably be a polyoxyalkylene chain-containing acrylic or methacrylic acid ester.

Specific examples thereof include commercial products available from NOF CORPORATION (e.g. BLEMMER PE-90, BLEMMER PE-200, BLEMMER PE-350, BLEMMER AE-90, BLEMMER AE-200, BLEMMER AE-350, BLEMMER PP-500, BLEMMER PP-800, BLEMMER PP-1000, BLEMMER AP-400, BLEMMER AP-550, BLEMMER AP-800, BLEMMER 700PEP-350B, BLEMMER 10PEP-550B, BLEMMER 55PET-400, BLEMMER 30PET-800, BLEMMER 55PET-800, BLEMMER 30PPT-800, BLEMMER 50PPT-800, BLEMMER 70PPT-800, BLEMMER PME-100, BLEMMER PME-200, BLEMMER PME-400, BLEMMER PME-1000, BLEMMER PME-4000, BLEMMER AME-400, BLEMMER 50POEP-800B, BLEMMER 50AOEP-800B, BLEMMER AEP, BLEMMER AET, BLEMMER APT, BLEMMER PLE, BLEMMER ALE, BLEMMER PSE, BLEMMER ASE, BLEMMER PKE, BLEMMER AKE, BLEMMER PNE, BLEMMER ANE, BLEMMER PNP, BLEMMER ANP, BLEMMER PNEP-600); commercial products available from KYOEISHA CHEMICAL CO., LTD. (e.g. LIGHT ESTER 130MA, LIGHT ESTER 041MA, LIGHT ESTER MTG, LIGHT ACRYLATE EC-A, LIGHT ACRYLATE MTG-A, LIGHT ACRYLATE 130A, LIGHT ACRYLATE DPM-A, LIGHT ACRYLATE P-200A, LIGHT ACRYLATE NP-4EA, LIGHT ACRYLATE NP-8EA, LIGHT ACRYLATE EHDG-A); commercial products available from Nippon Nyukazai Co., Ltd. (e.g. MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, RA-1820); commercial products available from SHIN-NAKAMURA CHEMICAL CO., LTD. (e.g. NK-ESTER M-20G, M-40G, M-90G, M-230G, AMP-10G, AMP-20G, AMP-60G, AM-90G, LA); and commercial products available from Sanyo Chemical Industries, Ltd. (e.g. ELEMINOL RS-30, RS-3000).

Monomers having two or more polymerizable unsaturated bonds, such as polyethylene glycol di(meth)acrylate, ethylene glycol di(meth)acrylate, triallyl cyanurate, allyl (meth)acrylate, and divinylbenzene, may also be used.

Moreover, a fluorine-containing acrylic resin emulsion having high water/oil repellency can be produced by using a fluorine-containing vinyl monomer, such as trifluoro(meth)acrylates, pentafluoro(meth)acrylates, perfluorocyclohexyl (meth)acrylate, 2,2,3,3-tetrafluoropropyl (meth)acrylate, and β-(perfluorooctyl)ethyl (meth)acrylate.

Furthermore, a crosslinked acrylic resin emulsion can be produced by copolymerizing the monomer described above with a carbonyl group-containing vinyl monomer and adding thereto hydrazine and/or a hydrazide group-containing compound.

The acrylic silicone resin emulsion corresponds to that obtained by modifying the acrylic resin emulsion with a silicon-containing compound, and has better weather resistance than the acrylic resin emulsion. The modification may be performed during the synthesis of the emulsion or may be separately performed after completion of the synthesis.

Alkoxysilyl group-containing acrylic resin emulsions, among the acrylic silicone resin emulsions, are particularly excellent in terms of stain resistance and weather resistance.

Moreover, the alkoxysilyl group-containing acrylic resin emulsion can be produced by multistage polymerization to form a core-shell structure, which makes it possible to impart flexibility without lowering stain resistance and weather resistance. Thus, it can be applied to soft bases such as elastic coating materials.

The alkoxysilyl group-containing acrylic resin emulsion may be produced by radical copolymerization of (a) an acrylic monomer, (b) an alkoxysilyl group-containing monomer, and (c) a monomer copolymerizable with these monomers.

Specific examples of (a) acrylic monomer include methyl (meth)acrylate, ethyl (meth)acrylate, iso-propyl (meth)acrylate, n-butyl (meth)acrylate, iso-butyl (meth)acrylate, tert-butyl (meth)acrylate, benzyl (meth)acrylate, cyclohexyl (meth)acrylate, 2-ethylhexyl (meth)acrylate, isodecyl (meth)acrylate, lauryl (meth)acrylate, tridecyl (meth)acrylate, stearyl (meth)acrylate, and isobornyl (meth)acrylate.

In particular, the storage stability of the emulsion can be greatly improved by using 60% by weight or more of a methacrylic acid ester containing an alkyl group and/or cycloalkyl group having 4 or more carbons.

It is preferable in terms of polymerization stability that the amount of (a) acrylic monomer be 60 to 100 parts by weight per 100 parts by weight of all monomer units forming the acrylic resin emulsion.

The (b) alkoxysilyl group-containing monomer is not particularly limited. It is preferred to use an alkoxysilyl group-containing monomer (b1) represented by Formula (2) and an alkoxysilyl group-containing monomer (b2) represented by Formula (3) in polymerization for the shell part and the core part, respectively.

The alkoxysilyl group-containing monomer (b1) is an organosilicon compound represented by Formula (2):

R³R⁴_{(3-b)}SiX_{b} (2)

wherein R³ represents an C2-C12 monovalent organic group containing a polymerizable double bond; R⁴ represents a C1-C4 alkyl group; X represents a C1-C4 alkoxy group; and b represents 2 or 3, and thus has two or three alkoxy groups and a reactive double bond. Specific examples thereof include vinyltrimethoxysilane, γ-(meth)acryloxypropyltrimethoxysilane, vinyltriethoxysilane, γ-(meth)acryloxypropyltriethoxysilane, γ-(meth)acryloxypropyltripropoxysilane, γ-(meth) acryloxypropyltributoxysilane, vinylmethyldimethoxysilane, γ-(meth)acryloxypropylmethyldimethoxysilane, vinylmethyldiethoxysilane, γ-(meth)acryloxypropylmethyldiethoxysilane, γ-(meth)acryloxypropylmethyldipropoxysilane, and γ-(meth)acryloxypropylmethyldibutoxysilane. These may be used alone or in combination of two or more. In terms of the storage stability of the emulsion, in particular, the group X particularly preferably has 2 to 4 carbons.

When such a monomer is used in an amount of 0.5 to 20 parts by weight, preferably 1 to 15 parts by weight per 100 parts by weight of that for the shell part in the core-shell type emulsion, a highly crosslinked shell part can be obtained which improves weather resistance, coating film hardness, and blocking resistance.

The alkoxysilyl group-containing monomer (b2) is an organosilicon compound represented by Formula (3):

R⁵R⁶₍₃₋ₐ₎SiYₐ (3)

wherein R⁵ represents a C2-C12 monovalent organic group containing a polymerizable double bond; R⁶ represents a C1-C4 alkyl group; Y represents a C1-C4 alkoxy group; a represents an integer of 1 or 2 satisfying the relation: a < b, and thus has one or two alkoxy groups and a reactive double bond. Specific examples thereof include vinylmethyldimethoxysilane, vinylmethyldiethoxysilane, γ-(meth)acryloxypropylmethyldimethoxysilane, γ-(meth)acryloxypropylmethyldiethoxysilane, γ-(meth)acryloxypropylmethyldipropoxysilane, γ-(meth)acryloxypropylmethyldibutoxysilane, vinyldimethylmethoxysilane, vinyldimethylethoxysilane, γ-(meth)acryloxypropyldimethylethoxysilane, γ-(meth)acryloxypropyldimethylmethoxysilane, γ-(meth)acryloxypropyldimethylpropoxysilane, and γ-(meth)acryloxypropyldimethylbutoxysilane. These may be used alone or in combination of two or more.

When such a monomer is used in an amount of 0 to 20 parts by weight, preferably 0.5 to 10 parts by weight per 100 parts by weight of that for the core part in the core-shell type emulsion, a moderately crosslinked structure can be introduced to the core part, which improves water resistance and weather resistance without impairing flexibility.

It is preferable in terms of adhesiveness, tackiness, flexibility, and storage stability that the carbon numbers X and Y of the alkoxy groups in the respective monomers (b1) and (b2) satisfy the relation: X > Y.

It is preferable in terms of polymerization stability and storage stability that the amount of (b) alkoxysilyl group-containing monomer be 0 to 20 parts by mass based on the total parts by weight of all monomer units forming the acrylic resin emulsion.

The component (c) is different from the components (a) and (b), and is not particularly limited as long as it is copolymerizable with the components (a) and (b). Specific examples thereof include: aromatic hydrocarbon vinyl monomers such as styrene, α-methylstyrene, chlorostyrene, 4-hydroxystyrene, and vinyltoluene; vinyl esters and allyl compounds such as vinyl acetate, vinyl propionate, vinyl versatate, and diallyl phthalate; nitrile group-containing vinyl monomers such as (meth)acrylonitrile; epoxy group-containing vinyl monomers such as glycidyl (meth)acrylate; hydroxy group-containing vinyl monomers such as 2-hydroxypropyl (meth)acrylate, 2-hydroxypropyl (meth)acrylate, 2-hydroxyethyl vinyl ether, hydroxystyrene, ARONIX 5700 (available from TOAGOSEI CO., LTD.), placcel FA-1, placcel FA-4, placcel FM-1, and placcel FM-4 (these four are available from Daicel Corporation), HE-10, HE-20, HP-10, and HP-20 (these four are available from NIPPON SHOKUBAI CO. , LTD.), BLEMMER PEP series, BLEMMER NKH-5050, and BLEMMER GLM (these three are available from NOF CORPORATION), and hydroxy group-containing vinyl types, modified hydroxyalkyl vinyl monomers; compounds such as AS-6, AN-6, AA-6, AB-6, and AK-5 which are macromonomers available from TOAGOSEI CO., LTD. ; and vinyl methyl ether, propylene, and butadiene.

Moreover, hydrophilic vinyl monomers may also be used. Examples of hydrophilic group-containing vinyl monomers that can be used include sodium styrene sulfonate, sodium 2-sulfoethyl methacrylate, ammonium 2-sulfoethyl methacrylate, and polyoxyalkylene chain-containing vinyl monomers. The polyoxyalkylene chain-containing vinyl monomer is not limited, and may preferably be a polyoxyalkylene chain-containing acrylic or methacrylic acid ester. Specific examples thereof include: BLEMMER PE-90, PE-200, PE-350, AE-90, AE-200, AE-350, PP-500, PP-800, PP-1000, AP-400, AP-550, AP-800, 700PEP-350B, 10PEP-550B, 55PET-400, 30PET-800, 55PET-800, 30PPT-800, 50PPT-800, 70PPT-800, PME-100, PME-200, PME-400, PME-1000, PME-4000, AME-400, 50POEP-800B, 50AOEP-800B, AEP, AET, APT, PLE, ALE, PSE, ASE, PKE, AKE, PNE, ANE, PNP, ANP, and PNEP-600 (all available from NOF CORPORATION) ; LIGHT ESTER 130MA, 041MA, MTG, LIGHT ACRYLATE EC-A, MTG-A, 130A, DPM-A, P-200A, NP-4EA, NP-8EA, and EHDG-A (all available from KYOEISHA CHEMICAL CO., LTD.); MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, and RA-1820 (all available from Nippon Nyukazai Co., Ltd.); and NK-ESTER M-20G, M-40G, M-90G, M-230G, AMP-10G, AMP-20G, AMP-60G, AM-90G, and LA (all available from SHIN-NAKAMURA CHEMICAL CO., LTD.).

Monomers having two or more polymerizable unsaturated bonds, such as polyethylene glycol di(meth)acrylate, ethylene glycol di(meth)acrylate, triallyl cyanurate, allyl (meth)acrylate, and divinylbenzene, may also be used as the component (c). In such cases, a crosslinked structure is formed inside the produced particle and thus the formed coating film has better water resistance.

High water/oil repellency can be provided by using as the component (c) a fluorine-containing vinyl monomer, such as trifluoro(meth)acrylates, pentafluoro(meth)acrylates, perfluorocyclohexyl (meth)acrylate, 2,2,3,3-tetrafluoropropyl methacrylate, and β-(perfluorooctyl)ethyl (meth)acrylate.

Moreover, crosslinked properties can also be provided by using a carbonyl group-containing vinyl monomer such as diacetone acrylamide and methyl vinyl ketone as the component (c) and adding hydrazine and/or a compound containing a hydrazide group. In such cases, the formed coating film has better water resistance.

Especially when a hydroxy group-containing vinyl monomer and/or a polyoxyalkylene chain-containing vinyl monomer is used in an amount corresponding to 0.5 to 20% by weight of the weight of emulsion particles, the mechanical stability and chemical stability of the emulsion can be improved without impairing the stability of the alkoxysilyl group. In particular, the use of a vinyl monomer containing a polyoxyalkylene chain terminated with a hydroxy group is particularly effective.

If the amount used is less than 0.5% by weight, mechanical stability and chemical stability are poor. If the amount is more than 20% by weight, water resistance is lowered. The amount is particularly preferably 1 to 5% by weight.

It is preferable in terms of polymerization stability that the amount of component (c) be 0 to 40 parts by weight per 100 parts by weight of all monomer units forming the acrylic resin emulsion.

Next, a description is given on the method of producing the emulsion.

The emulsion can be obtained by emulsion-polymerization of a mixture containing the components (a), (b), and (c) according to a known emulsion-polymerization method.

In producing a core-shell type emulsion, in the first step, a mixture containing the components (a), (b2), and (c) is first emulsion-polymerized by a known emulsion-polymerization method to prepare a core component, and then a mixture containing the components (a), (b1), and (c) is emulsion-polymerized in the presence of the obtained core component to introduce a shell component. It is to be noted that the polymerization of each component of the core part and shell part may be performed in several steps.

In a case where the core component is sufficiently hydrophobic compared to the shell component, a target composition can be obtained even when polymerization of the shell component is first performed.

A commonly used ionic or nonionic surfactant may be used in the emulsion polymerization.

Typical examples of the ionic surfactant include: polyoxyethylene chain-containing anionic surfactants such as polyoxyethylene nonyl phenyl ether sulfate, polyoxyethylene allyl ether sulfate, octylphenoxyethoxyethylsulfonate, and polyoxyethylene tridecyl ether sulfate; sulfonates such as sodium lauryl sulfonate, sodium dodecylbenzene sulfonate, and sodium isooctylbenzene sulfonate; and ammonium salts such as imidazoline laurate and ammonium hydroxide. Preferred among these are polyoxyethylene chain-containing anionic surfactants.

Typical examples of the non-ionic surfactant include: polyethylene glycol nonyl phenyl ether; polyoxyethylenes such as polyoxyethylene nonyl phenyl ether and polyoxyethylene lauryl ether; and silicone-containing nonionic surfactants such as L-77, L-720, L-5410, L-7602, and L-7607 (all available from Dow Corning Toray).

In the present invention, it is preferable in terms of water resistance and weather resistance to use as the surfactant a reactive surfactant containing a polymerizable double bond in each molecule. Especially when a reactive surfactant containing a polyoxyalkylene group within the molecule is used, mechanical stability can be improved.

Specific examples of the reactive surfactant include: Adeka Reasoap ER-10, ER-20, ER-30, ER-40, SR-05, SR-10, SR-20, SR-30, SR-1025, SR-10S, NE-10, NE-20, NE-30, NE-40, and SE-10N (all available from ADEKA CORPORATION) ; Antox-MS-60, RMA-1120, RMA-564, RMA-568, and RMA-506 (all available from Nippon Nyukazai Co., Ltd.); AQUARON KH-05, KH-10, KH-0530, KH-1025, RN-20, RN-30, RN-50, RN-2025, HS-10, HS-20, HS-1025, BC-05, BC-10, BC-0515, and BC-1025 (all available from DAI-ICHI KOGYO SEIYAKU CO.,LTD.); ELEMINOL JS-2, JS-20, RS-30, and RS-3000 (all available from Sanyo Chemical Industries, Ltd.); and LATEMUL S-180, S-180A, PD-104, PD-420, PD-430, and PD-450 (all available from Kao Corporation).

In particular, alkylphenol-free surfactants are preferred in consideration of the environmental load.

Each surfactant may be used solely, or two or more surfactants may be used in admixture. The amount thereof is 10 parts by weight or less, preferably 0.5 to 8 parts by weight, per 100 parts by weight of total monomer.

The polymerization initiator is not particularly limited, and may preferably be a redox-type polymerization initiator for more stable polymerization. In order to maintain the stability of a mixed liquid during polymerization and achieve stable polymerization, it is preferred to set the temperature to 70 °C or lower and preferably to a range of 40 to 65°C, and adjust the pH to 5 to 9.

Examples of the redox-type initiators include potassium persulfate, ammonium persulfate, hydrogen peroxide, t-butyl hydroperoxide, benzoyl peroxide, and cumene hydroperoxide. Examples of the reducing agent to be combined therewith include sodium hydrogen sulfite, Rongalite, Bruggolite FF-6 (available from Bruggamann Chemical US), thiourea dioxide, and L-ascorbic acid. Especially, preferred are combinations of an organic peroxide (e.g. t-butyl hydroperoxide, benzoyl peroxide, cumene hydroperoxide) with any one of Rongalite, Bruggolite FF-6, and thiourea dioxide.

From the environmental viewpoint, the reducing agent is particularly preferably Bruggolite FF-6 or thiourea dioxide as they do not generate formaldehyde.

The amount of polymerization initiator is 0.01 to 10 parts by weight, preferably 0.05 to 5 parts by weight, per 100 parts by weight of total monomer. If the amount of polymerization initiator is less than 0.01 parts by weight, polymerization may be less likely to proceed. If the amount is more than 10 parts by weight, the molecular weight of the resulting polymer tends to be reduced.

For the purpose of stably providing catalytic activity to the polymerization initiator, a compound containing a divalent iron ion such as iron sulfate and a chelating agent such as disodium ethylenediaminetetraacetate may be used. The amount of chelating agent is 0.0001 to 1 part by weight, preferably 0.001 to 0.5 parts by weight, per 100 parts by weight of total monomer.

A chain transfer agent may be added to adjust the molecular weight of the polymer. Known chain transfer agents may be used including, for example, mercaptan compounds such as n-dodecyl mercaptan, tert-dodecyl mercaptan, n-butyl mercaptan, γ-mercaptopropyltrimethoxysilane, γ-mercaptopropyltriethoxysilane, γ-mercaptopropylmethyldimethoxysilane, and γ-mercaptopropylmethyldiethoxysilane; organohalides such as chloroform and carbon tetrachloride; and sulfide benzene, isopropyl benzene, and ferric chloride.

In order to maintain the stability of the emulsion, the pH is preferably maintained at 6 to 10 using a base and/or buffer after completion of the polymerization. The base and/or buffer used in this pH adjustment/maintenance is not particularly limited as long as it is a commonly used one. Examples of the bases include: alkali metal hydroxides such as sodium hydroxide and potassium hydroxide; ammonium; and organic amines. Examples of the buffers include: carbonates such as sodium hydrogen carbonate and disodium hydrogen phosphate; phosphates; and carboxylates. Preferred among these pH adjusters and buffers are those containing alkali metals, with sodium hydrogen carbonate being more preferred.

The resin solid contents of the acrylic resin emulsion and the acrylic silicone resin emulsion are each preferably adjusted to 20 to 70% by weight, and more preferably 30 to 60% by weight. If the resin solid content is more than 70% by weight, the viscosity of the system tends to significantly increase, making it difficult to remove heat generated along with the polymerization reaction and to take a long time to take out the system from the polymerization reactor. If the resin solid content is less than 20% by weight, though it does not cause any problem in the polymerization operation, the amount of resin produced in each polymerization procedure is small, resulting in economical inefficiency, as well as the disadvantages of reduced coating workability and reduced coating film properties because, for example, the resulting coating film is thin.

The acrylic resin emulsion and the acrylic silicone resin emulsion each preferably have an average particle size of about 0.02 to 1.0 µm. The average particle size can be controlled by adjusting the amount of surfactant charged at the initial stage of the polymerization.

These acrylic resin emulsion and acrylic silicone resin emulsion are available from various companies. Examples thereof include: VONCOAT and WATERSOL (both available from DIC Corporation); acrylic set and UW (both available from NIPPON SHOKUBAI CO., LTD.); POLYSOL (available from SHOWA HIGHPOLYMER CO., LTD.); YODOSOL and KANEBINOL (both available from Henkel Technologies Japan); POLYTRON and POLYDUREX (both available from Asahi Kasei Chemicals Corporation); rikabond (available from CSC co., ltd.); PRIMAL (available from ROHM AND HAAS JAPAN K.K.); Acronal (available from BASF JAPAN Ltd.); Mowinyl (available from Nichigo-Mowinyl Co., Ltd.); and Kaneka Gemlac and Kanevilack (both available from Kaneka Corporation).

The urethane resin emulsions are obtained by dispersing urethane resin in water and include those containing a self-dispersing urethane resin obtained by adding a hydrophilic group to urethane resin; and those obtained by forcibly emulsifying hydrophobic urethane resin using an emulsifier or the like. Any of these may be used.

Examples thereof include: Superflex 90, Superflex 107M, Superflex 110, Superflex 126, Superflex 130, Superflex 150, Superflex 150HS, Superflex 160, Superflex 300, Superflex 361, Superflex 370, Superflex 410, Superflex 420, Superflex 460, Superflex 460S, Superflex 500, Superflex 600, Superflex E-2000, Superflex E-2500, Superflex E-4000, Superflex E-4500, Superflex E-4700, Superflex R-5000, ELASTRON BN-08, ELASTRON BN-11, and ELASTRON BN-50D (all available from DAI-ICHI KOGYO SEIYAKU CO.,LTD.); NeoRez R-960, NeoRez R-972, NeoRez R-9637, NeoRez R-9679, NeoRez AX-311, NeoRez R-966, NeoRez R-967, NeoRez R-9603, NeoRez R-600, NeoRez R-9320, NeoRez R-9617, NeoRez R-9621, NeoPac R-9000, and NeoPac R-9699 (all available from DSM. N. K) ; TAKELAC W-615, TAKELAC W-6010, TAKELAC W-6020, TAKELAC W-6061, TAKELAC W-511, TAKELAC W-405, TAKELAC W-7004, TAKELAC W-605, TAKELAC W-512A6, TAKELAC W-635, TAKELAC W-635C, TAKELAC WS-7000, TAKELAC WS-5000, TAKELAC WS-5070X, TAKELAC WS-4000, and TAKELAC XW-75-X35 (all available from MITSUI CHEMICALS POLYURETHANES) ; and ADEKA BONTIGHTER HUX-290H, ADEKA BONTIGHTER HUX-290K, ADEKA BONTIGHTER HUK-290N, ADEKA BONTIGHTER HUX-395D, ADEKA BONTIGHTER HUX-394, ADEKA BONTIGHTER HUX-232, ADEKA BONTIGHTER HUX-240, ADEKA BONTIGHTER HUX-320, ADEKA BONTIGHTER HUX-350, ADEKA BONTIGHTER HUX-380, ADEKA BONTIGHTER HUX-381, ADEKA BONTIGHTER HUX-388, ADEKA BONTIGHTER HUX-380A, ADEKA BONTIGHTER HUX-386, ADEKA BONTIGHTER HUX-401, ADEKA BONTIGHTER HUX-750, ADEKA BONTIGHTER HUX-670, ADEKA BONTIGHTER HUX-680, ADEKA BONTIGHTER HUX-575, and ADEKA BONTIGHTER HUX-580 (all available from ADEKA Corporation).

The urethane resin emulsion may be used alone or in admixture with another resin emulsion. In particular, its mixture with an acrylic resin emulsion is useful in view of ease of designing a coating material and cost.

The fluororesin emulsions include those obtained by dispersing a fluoroolefin polymer and/or a copolymer of a fluoroolefin and a monomer copolymerizable therewith in water.

The fluororesin emulsions include those obtained by dispersing a fluoroolefin polymer and/or a copolymer of a fluoroolefin and a monomer copolymerizable therewith in water.

Examples of the fluoroolefins include vinylidene fluoride, trifluoroethylene, chlorotrifluoroethylene, tetrafluoroethylene, pentafluoropropylene, and hexafluoropropylene.

Examples of the monomer copolymerizable with a fluoroolefin include: olefins such as ethylene and propylene; vinyl ethers such as ethyl vinyl ether, propyl vinyl ether, butyl vinyl ether, and cyclohexyl vinyl ether; vinyl esters such as butyl vinyl ester, octyl vinyl ester, vinyl acetate, vinyl versatate (VeoVa 10, VeoVa 9, and VeoVa 11 available from Hexion Specialty Chemicals Japan); aromatic vinyl compounds such as styrene and vinyltoluene; allyl ethers such as ethyl allyl ether and allyl compounds such as butyl allyl ester; and (meth) acrylic acid esters.

These are available from various companies, and examples thereof include: lumiflon available from ASAHI GLASS CO., LTD.; ZEFFLE available from DAIKIN INDUSTRIES, LTD.; CEFRAL COAT available from Central Glass Co., Ltd.; FLUONATE available from DIC Corporation; ZAFLON available from TOAGOSEI CO., LTD.; Kynar available from ARKEMA (France); and SIFCLEAR available from JSR Corporation.

### [(A2) Heat-shielding pigment]

With the heat-shielding pigment used in the present invention added to an acrylic silicone resin emulsion (Kaneka Gemlac W3123F) in an amount corresponding to a pigment volume concentration (PVC) of 60%, the resulting composition applied at a wet film thickness of 1 mm to a white board to form a coating film has a solar reflectance of 40% or higher in a wavelength range from 780 to 2500 nm.

The pigments that are used to give such reflectance include infrared reflective pigments, and at least one of transparent pigments and hollow particles.

Specific examples of infrared reflective powders include aluminum flakes, titanium oxide, barium sulphate, zinc oxide, calcium carbonate, silicon oxide, magnesium oxide, zirconium oxide, yttrium oxide, indium oxide, alumina, composite iron-chromium oxide, composite manganese-bismuth oxide, composite manganese-yttrium oxide, aluminum hydroxide, magnesium hydroxide, indium tin oxide, and antimony doped tin oxide.

Titanium oxide commonly used in coating materials may be used. When titanium oxide having a large particle size (0.4 µm or more) is used, its mixture with other pigments for toning has a reflectance higher than when conventional titanium oxide is used. Also, in the case of using such titanium oxide in an undercoat material for coating materials containing infrared transparent type heat-shielding pigments, the reflectance is higher than that in the case of using conventional titanium oxide.

Examples of infrared transparent powders include perylene pigments, azo pigments, chrome yellow, red iron oxide, vermilion, titanium red, cadmium red, quinacridone red, isoindolinone, benzimidazolone, phthalocyanine green, phthalocyanine blue, cobalt blue, indanthrene blue, ultramarine blue, and prussian blue. One or two or more of these may be used.

Furthermore, hollow particles refer to inorganic and/or organic particles having a hollow part. When the hollow part is designed to have a size comparable to the wavelength of light, it is considered that the reflection in the visible light and infrared ranges associated with the wavelength becomes stronger based on the Mie scattering theory. Moreover, since the refractive index difference and the refractive index ratio are greater on the particle/hollow part interface than on the particle/resin interface, the reflection of visible light and infrared rays is considered to be increased on the particle/hollow part interface. Examples of the inorganic hollow particles include glass balloons, silica balloons, sirasu balloons, alumina balloons, zirconia balloons, and aluminosilicate balloons.

In general, if an infrared reflective powder is used alone, there is a limitation on displayable colors. By appropriately combining these infrared transparent powders or hollow particles with the infrared reflective powders, coating films of various colors can be formed.

Specific examples of available products include Ti-Pure R706 (titanium oxide, available from Du Pont), TITANIX JR-1000 (titanium oxide, available from TAYCA), PCF105 (titanium oxide, available from ISHIHARA SANGYO KAISHA, LTD.), LPZINC-2 (zinc oxide pigment, available from SAKAI CHEMICAL INDUSTRY CO., LTD.), Lumogen Black FK4280 (perylene pigment, available from BASF JAPAN Ltd.), Lumogen Black FK4281(perylene pigment, available from BASF JAPAN Ltd.), Paliogen Black S0084 (perylene pigment, available from BASF JAPAN Ltd.), Paliogen Black L0086 (perylene pigment, available from BASF JAPAN Ltd.), 42703-A (composite oxide pigment, available from Tokan Material Technology Co., Ltd.), 42707-A (composite oxide pigment, available from Tokan Material Technology Co., Ltd.), AB820 Black (composite oxide pigment, available from KAWAMURA CHEMICAL CO., LTD.), AB801 Black (composite oxide pigment, available from KAWAMURA CHEMICAL CO., LTD.), AG235 Black (composite oxide pigment, available from KAWAMURA CHEMICAL CO. , LTD.), Black #6301 (manganese yttrium black pigment, available from ASAHI KASEI KOGYO CO., LTD.), Black #6303 (manganese yttrium black pigment, available from ASAHI KASEI KOGYO CO., LTD.), Black #6350 (manganese yttrium black pigment, available from ASAHI KASEI KOGYO CO., LTD.), DAIPYROXIDE BLACK #9581 (composite oxide pigment, available from Dainichiseika Color & Chemicals Mfg. Co., Ltd.), DAIPYROXIDE BROWN #9290 (composite oxide pigment, available from Dainichiseika Color & Chemicals Mfg. Co., Ltd.), DAIPYROXIDE BLACK #9590 (composite oxide pigment, available from Dainichiseika Color & Chemicals Mfg. Co., Ltd.), DAIPYROXIDE BLACK #9595 (composite oxide pigment, available from Dainichiseika Color & Chemicals Mfg. Co., Ltd.), DAIPYROXIDE BLACK #9598 (composite oxide pigment, available from Dainichiseika Color & Chemicals Mfg. Co. , Ltd.), CHOMOFINE BLACK A-1103 (azomethine pigment, available from Dainichiseika Color & Chemicals Mfg. Co., Ltd.), SYMULERFAST YELLOW 4192 (benzoimidazolone pigment, available from DIC Corporation), CHOMOFINE YELLOW 2080 (benzoimidazolone pigment, available from Dainichiseika Color & Chemicals Mfg. Co., Ltd.), CHOMOFINE YELLOW 2081 (benzoimidazolone pigment, available from Dainichiseika Color & Chemicals Mfg. Co., Ltd.), CHOMOFINE YELLOW 2085 (benzoimidazolone pigment, available from Dainichiseika Color & Chemicals Mfg. Co., Ltd.), CHOMOFINE YELLOW 3700LD (benzoimidazolone pigment, available from Dainichiseika Color & Chemicals Mfg. Co., Ltd.), CHOMOFINE YELLOW 3701 (benzoimidazolone pigment, available from Dainichiseika Color & Chemicals Mfg. Co., Ltd.), SYMULERFAST YELLOW 10GH (azo pigment, available from DIC Corporation), SYMULERFAST YELLOW 8GTF (azo pigment, available from DIC Corporation), CHOMOFINE YELLOW 5910 (azo pigment, available from Dainichiseika Color & Chemicals Mfg. Co., Ltd.), CHOMOFINE YELLOW 2700L (azo pigment, available from Dainichiseika Color & Chemicals Mfg. Co. , Ltd.), CHOMOFINE YELLOW 2054 (azo pigment, available from Dainichiseika Color & Chemicals Mfg. Co., Ltd.), CHOMOFINE YELLOW 2700 (azo pigment, available from Dainichiseika Color & Chemicals Mfg. Co., Ltd.), CHOMOFINE YELLOW 2035 (azo pigment, available from Dainichiseika Color & Chemicals Mfg. Co., Ltd.), CHOMOFINE YELLOW A-3 (azo pigment, available from Dainichiseika Color & Chemicals Mfg. Co., Ltd.), SYMULERSUPER RED 7100Y (quinacridone pigment, available from DIC Corporation), SYMULERSUPER MAGENTAR (quinacridone pigment, available from DIC Corporation), SYMULERSUPER MAGENTARH (quinacridone pigment, available from DIC Corporation), CHOMOFINE RED 6820 (quinacridone pigment, available from Dainichiseika Color & Chemicals Mfg. Co., Ltd.), CHOMOFINE RED 6821 (quinacridone pigment, available from Dainichiseika Color & Chemicals Mfg. Co., Ltd.), CHOMOFINE RED 6830 (quinacridone pigment, Dainichiseika Color & Chemicals Mfg. Co., Ltd.), CHOMOFINE MAGENTA 6891N (quinacridone pigment, Dainichiseika Color & Chemicals Mfg. Co., Ltd.), CHOMOFINE MAGENTA 6887 (quinacridone pigment, available from Dainichiseika Color & Chemicals Mfg. Co., Ltd.), SYMULERBULERS (copper phthalocyanine blue pigment, available from DIC Corporation), SYMULERBULERSK (copper phthalocyanine blue pigment, available from DIC Corporation), SYMULERBULE 5380 (copper phthalocyanine blue pigment, available from DIC Corporation), SYMULERBULE5485 (copper phthalocyanine blue pigment, available from DIC Corporation), CHOMOFINE BULES-2100 (copper phthalocyanine blue pigment, available from Dainichiseika Color & Chemicals Mfg. Co., Ltd.), CHOMOFINE BULE 4927B (copper phthalocyanine blue pigment, available from Dainichiseika Color & Chemicals Mfg. Co., Ltd.), CHOMOFINE BULE 4940 (copper phthalocyanine blue pigment, available from Dainichiseika Color & Chemicals Mfg. Co., Ltd.), CHOMOFINE BULE 4930PK (copper phthalocyanine blue pigment, available from Dainichiseika Color & Chemicals Mfg. Co., Ltd.), CHOMOFINE BULE 4982 (copper phthalocyanine blue pigment, available from Dainichiseika Color & Chemicals Mfg. Co., Ltd.), CHOMOFINE BULE 4966 (copper phthalocyanine blue pigment, available from Dainichiseika Color & Chemicals Mfg. Co., Ltd.), CHOMOFINE BULE 5191 (copper phthalocyanine blue pigment, available from Dainichiseika Color & Chemicals Mfg. Co., Ltd.), CHOMOFINE BULE 5192 (copper phthalocyanine blue pigment, available from Dainichiseika Color & Chemicals Mfg. Co., Ltd.), CHOMOFINE BULE 5195N (copper phthalocyanine blue pigment, available from Dainichiseika Color & Chemicals Mfg. Co. , Ltd.), and CHOMOFINE BULE 5165 (copper phthalocyanine blue pigment, available from Dainichiseika Color & Chemicals Mfg. Co., Ltd.).

The combined use with titanium dioxide surface-treated with at least three including silicon dioxide, aluminum oxide, and zirconium dioxide allows weather resistance to be improved without greatly affecting the reflectance. Such titanium oxide is available from various companies, and examples thereof include D-918 and D-2667 available from SAKAI CHEMICAL INDUSTRY CO., LTD., PFC-105 available from ISHIHARA SANGYO KAISHA, LTD., and KRONOS 2315 and KRONOS 2310 available from Kronos, Inc. (Germany).

Also usable are pigment pastes prepared by homogeneously dispersing the above-mentioned pigments in water and/or a solvent using a water-soluble resin or surfactant.

Such pigment pastes are available from various companies, and examples thereof include: LIOFAST color, LIOFAST SF color, LIOCONC color, and EM color, all available from TOYOCHEM CO., LTD.; Aqua Fine color, Master Fine color, EP color, AM color, WA color, ET base color, FTR base color, ST base color, and VT-U base color, all available from Dainichiseika Color & Chemicals Mfg. Co., Ltd.; Unirant aqueous conc., Unirant 33, Unirant 77, Unirant 88, Unirant 55, and Unirant high conc., all available from YOKOHAMA CHEMICALS CO., LTD.; and DISPERSE SD Color, DISPERSE UNI Color, DISPERSE SR Color, DISPERSE HG Color, and DISPERSE SDP Color, all available from DIC Corporation.

Examples of those in which heat-shielding pigments are dispersed, among these, include: LIOFAST SF696 Black (containing perylene black (Pigment Black 31)), LIOFAST SF698 Black (containing bismuth vanadate (Pigment Yellow 184), quinacridone (Pigment Violet 19), β crystals of copper phthalocyanine (Pigment Blue 15:3), and barium sulphate (Pigment White 21)), and PA0724 Black (containing a bismuth pigment), all available from TOYOCHEM CO., LTD.; MF-4581 Black (containing a composite copper/bismuth oxide) and AF Black E-40 (containing azomethine black), both available from Dainichiseika Color & Chemicals Mfg. Co., Ltd.; and EMR-D5660 (aluminum flakes) available from TOYO ALUMINUM K.K.

Examples of the inorganic hollow particles include "CEL-STAR" (available from Tokai Kogyo Co., Ltd.) and "Glass Bubbles" (available from Sumitomo 3M Limited). Examples of the organic hollow particles include "MH5055" and "ROPAQUE HP-1055" (both available from ZEON CORPORATION), and "GRANDOLL PP-1000" and "GRANDOLL PP-1100", and "GRANDOLL PP-2000S" (all available from DIC Corporation).

Other color pigments may be used provided that a coating film formed by applying the resulting composition to a white board has a solar reflectance of not less than 40% in a wavelength range of 780 to 2500 nm.

The amount of (A2) heat-shielding pigment is typically 1 to 600 parts by weight and preferably 2 to 450 parts by weight per 100 parts by weight of total solids of (A1) water-soluble and/or water-dispersible resin. Within such a range, the color of the coating material can be toned as desired and the weather resistance of the coating film can be ensured.

### [(B1) Organosilicate and/or modified product thereof]

The organosilicate refers to a compound containing a hydrolyzable silyl group as represented by Formula (4). Its combined use with (B5) an organosilane and/or a hydrolysis condensate thereof described later can further improve weather resistance.

Si-(OR)₄ (4)

wherein Rs are the same as or different from each other and each represent a C1-C4 alkyl group.

Specific examples of such a compound include tetramethoxysilane, tetraethoxysilane, tetra-n-propoxysilane, tetra-i-propoxysilane, tetra-n-butoxysilane, tetra-i-butoxysilane, and tetra-t-butoxysilane, and partial hydrolysis condensates thereof. In particular, preferred are ethyl silicate 40 and ethyl silicate 48. Each of these compounds may be used alone or two or more of these may be used in combination. Moreover, also usable are organosilicates containing different alkoxysilyl groups in each molecule. Examples thereof include methyl ethyl silicate, methyl propyl silicate, methyl butyl silicate, ethyl propyl silicate, and propyl butyl silicate. The ratio of these substituent groups may be arbitrarily varied between 0% and 100%. As described above, partial hydrolysis condensates of these silicates may also be used. The condensation degree thereof is preferably about 1 to 20. The condensation degree is more preferably in a range from 3 to 15.

In the above description on the organosilicate compound; the exemplary compounds contain alkoxysilyl functional groups whose alkoxy moiety has 1 to 4 carbons. It is generally known that a smaller carbon number leads to higher reactivity. In the case of being added to an aqueous coating material, an organosilicate with a small carbon number (e.g. methyl silicate) is so highly reactive that the time needed for the coating material to gelate (i.e., pot life) is shortened. In contrast, in the case of using butyl silicate with a large carbon number, a less amount of stain resistance is imparted to the coating material while pot life is extended. When considering the balance between stain resistance and pot life, in cases where an alkoxysilyl group whose alkyl moiety has a carbon number of 1 is present in combination with an alkoxysilyl group whose alkyl moiety has a carbon number of 2, 3, or 4, those with a carbon number of 2 and with a carbon number of 3 or 4 are preferably present together. The carbon number is preferably 1.5 to 2.8 on average. In other words, an equimolar mixture of methyl silicate and ethyl silicate, or a silicate having equal numbers of methyl and ethyl groups in each molecule is considered to correspond to an alkyl moiety having 1.5 carbons.

Since (B1) organosilicate and (B4) an organosilane and/or a condensate thereof described later are less miscible with water, they may reduce the gloss of the coating film. To prevent reduction in gloss, they are preferably added after being emulsified using a surface-active substance in water or added as a mixture with a surface-active substance. The surface-active substance refers to a substance containing a hydrophilic group and a hydrophobic group within the molecule and capable of emulsifying and dispersing (B1) organosilicate and (B4) organosilane and/or condensate thereof in water. Specific examples thereof include anionic surfactants, nonionic surfactants, cationic surfactants, and amphoteric surfactants.

Examples of the anionic surfactants include: various water-soluble oligomers selected from the group consisting of higher alcohol sulfuric acid ester salts, alkyl(benzene)sulfonates, alkyl sulfates, polyoxyethylene alkylphenyl sulfonates, alkyl diphenyl ether sulfonates, polyoxyethylene alkylphenol sulfates, styrene sulfonates or vinyl sulfates, alkyl sulfosuccinates, alkyl naphthalene sulfonates, alkyl phosphates, polyoxyethylene alkyl phosphoric acid esters, polyacrylic acid (salts), and sulfonates; and various compounds such as water-soluble acrylic resins or derivatives of these. These may be used alone or in combination of two or more.

Examples of the nonionic surfactants include various water-soluble polymer nonionic active agents such as polyoxyethylene alkyl ethers, polyoxyethylene alkyl phenyl ethers, polyoxyethylene higher fatty acid esters, sorbitan fatty acid esters, polyoxyethylene sorbitan fatty acid esters, polyoxyethylene-polyoxypropylene block copolymers, acetylene glycol surfactants, polyvinyl alcohol and hydroxyethylcellulose although these examples are only some particularly typical ones. These may be used alone or in combination of two or more.

Examples of the cationic surfactants include alkyl amine salts, quaternary ammonium salts such as alkyl trialkyl ammonium chloride, alkylbetaines and amine oxides although these examples are only some particularly typical ones. These may be used alone or in combination of two or more.

The above-listed anionic surfactants, nonionic surfactants, or cationic surfactants may be used alone or in combination of two or more. As particularly suitable surfactants among these, nonionic surfactants containing no ionic group are more preferred.

The amount of surfactant calculated as active ingredient is 0.05 to 50 parts by weight, preferably 0.1 to 30 parts by weight, per 100 parts by weight of the total of (B1) organosilicate and (B4) organosilane and/or condensate thereof. If the amount is less than 0.05 parts by weight, the resulting emulsion is not stable and has lowered storage stability. If the amount is more than 50 parts by weight, the resulting coating film has problems such as poor appearance and lowered water resistance.

Examples of the cationic surfactants include alkyl amine salts, quaternary ammonium salts such as alkyl trialkyl ammonium chloride, alkylbetaines and amine oxides although these examples are only some particularly typical ones. These may be used alone or in combination of two or more.

The above-listed anionic surfactants, nonionic surfactants, or cationic surfactants may be used alone or in combination of two or more. As particularly suitable surfactants among these, nonionic surfactants containing no ionic group are more preferred.

Another method of improving miscibility includes modification by introducing a polyoxyalkylene chain or a hydrophilic group (e. g. amino group) so that the organosilicate is made water-soluble or self-water-dispersible.

The combined amount of (B1) organosilicate and/or modified product thereof and (B4) organosilane and/or condensate thereof is preferably 2 to 40 parts by weight per 100 parts by weight of total solids of (A1) water-soluble and/or water-dispersible resin. If the combined amount is less than 2 parts by weight, weather resistance and stain resistance tend to be insufficient. Also, if the combined amount is more than 40 parts by weight, the gloss of the resulting coating film tends to be reduced. The combined amount is more preferably 5 to 20 parts by weight. The amount of (B1) organosilicate and/or modified product thereof alone, not combined with the component (B4), is preferably 1 to 40 parts by weight, more preferably 2 to 30 parts by weight, and particularly preferably 5 to 20 parts by weight, per 100 parts by weight of total solids of (A1) water-soluble and/or water-dispersible resin.

### [(B2) Curing catalyst promoting hydrolysis/condensation reaction of alkoxysilyl group]

In applying the aqueous resin composition of the present invention, a crosslinking reaction can be promoted by the addition of a curing catalyst that promotes a hydrolysis/condensation reaction of an alkoxysilyl group. Organic metal compounds, acid catalysts, and basic catalysts may be used as the curing catalyst. Also usable are latent catalysts such as photoacid generators and photobase generators.

Particularly preferred in terms of activity are organotin compounds, acid phosphates, and reaction products of an acid phosphate and an amine.

Examples of the organotin compounds include dibutyltin dilaurate, dibutyltin dimaleate, dibutyltin dioleylmaleate, dioctyltin dilaurate, dibutyltin diacetate, dibutyltin dimethoxide, dibutyltin thioglycolate, dibutyltin bis(isononyl 3-mercaptopropionate), dibutyltin bis(isooctyl thioglycolate), dibutyltin bis(2-ethylhexyl thioglycolate), dimethyltin bis(dodecylmercaptide), dimethyltin bis(octylthioglycolate)salt, and tin octylate.

In particular, preferred from the viewpoint of stability in water are mercaptides such as dibutyltin thioglycolate, dibutyltin bis(isononyl 3-mercaptopropionate), dibutyltin bis(isooctyl thioglycolate), dibutyltin bis(2-ethylhexyl thioglycolate), dimethyltin bis(dodecylmercaptide), dibutyltin bis(dodecylmercaptide), dioctyltin bis(dodecylmercaptide), and dimethyltin bis(octylthioglycolate)salt.

The addition method is not particularly limited. A method of mixing the catalyst with a surface-active substance before addition is preferred in terms of miscibility into the emulsion and development of the gloss of the coating film.

Examples of the acid phosphate compounds include propyl acid phosphate, dibutyl phosphate, 2-ethylhexyl acid phosphate, di-2-ethylhexyl phosphate, monoisodecyl acid phosphate, diisodecyl phosphate, lauryl acid phosphate, and stearyl acid phosphate. Examples of amine compounds that can be reacted with the acid phosphate compound include N-ethylmorpholine, N-methyldiethanolamine, N-ethyldiethanolamine, N-n-butyldiethanolamine, N-t-butyldiethanolamine, triethylamine, n-butylamine, hexylamine, triethanolamine, diazabicycloundecene, and ammonium.

The addition method is not particularly limited, and self-emulsifying compounds can be added as they are. Compounds which show emulsifiability when (partially) neutralized with an amine compound are preferably emulsified in water before addition. Moreover, they may be added while being carried by an emulsion of an amino group-containing resin.

The photoacid generator refers to a compound that generates acid when exposed to light. Examples thereof include compounds that generate acid when irradiated with radiation as disclosed in JP-A H05-134412, for example, such as: onium salts, e.g., sulfonium salts, ammonium salts, phosphonium salts, iodonium salts, or selenium salts, of a strong acid (e.g. toluenesulfonic acid), boron tetrafluoride or the like; iron-allene complexes; silanol-metal chelate complexes; sulfonic acid derivatives such as disulfones, disulfonyl diazomethanes, disulfonyl methanes, sulfonyl benzoyl methanes, imide sulfonates, and benzoin sulfonates; and organic halides.

The photobase generator is not particularly limited, and examples thereof include cobalt amine complexes, O-acyloximes, carbamic acid derivatives, formamide derivatives, quaternary ammonium salts, tosylamines, carbamates, and amineimide compounds. Specific examples include 2-nitrobenzyl carbamate, 2,5-dinitrobenzyl cyclohexyl carbamate, N-cyclohexyl-4-methylphenylsulfonamide, and 1,1-dimethyl-2-phenylethyl-N-isopropyl carbamate. One photobase generator may be used alone, or two or more photobase generators may be used in combination.

The amount of curing catalyst is preferably 0.01 to 10 parts by weight, and particularly preferably 0.05 to 5 parts by weight, per 100 parts by weight of total solids of (A1) water-soluble and/or water-dispersible resin. If the amount is less than 0.01 parts by weight, curing activity is low. If the amount is more than 10 parts by weight, the pot life of the coating material is shortened and the resulting coating film has reduced water resistance and weather resistance.

### [(B3) Hindered amine light stabilizer (HALS) having a logarithm (pKa) of the reciprocal of acid dissociation constant of 7 or less]

Hindered amine light stabilizers (HALSs) are commonly used compounds that improve the weather resistance of a coating film by capturing radicals generated when the coating film is deteriorated, and rendering them harmless.

Many commonly used HALSs, however, have a large logarithm (pKa) of the reciprocal of acid dissociation constant, or, in other words, they are basic. If such a highly basic HALS is added to an aqueous coating material to which stain resistance is imparted by an organosilicate or its modified product, then stain resistance is often lowered. In contrast, when a HALS with a pKa of 7 or less is added to an aqueous coating material to which stain resistance is imparted by an organosilicate or its modified product, stain resistance is not lowered. The pKa is preferably 6.5 or less, but 1.5 or more, and is particularly preferably 6 or less, but 2.0 or more.

The pKa measurements are obtained by non-aqueous titration. Organic reference materials with known pKa values in water are titrated in non-aqueous media (1:1 acetonitrile:chloroform and 0.1 N perchloric acid/dioxane titrant system) to generate a non-aqueous calibration plot of half-neutralization potential (HNP) versus pKa. The "unknown" HALSs are then titrated to determine the HNP, and extrapolated to obtain the corresponding pKa from this calibration plot.

Specific commercial products having a pKa of 7 or less include: TINUVIN 123, TINUVIN 152, TINUVIN NOR 371 FF, TINUVIN XT855 FF, TINUVIN XT850 FF, TINUVIN 5100, and TINUVIN 622, all available from BASF JAPAN Ltd.; ADK STAB LA-81 available from ADEKA Corporation, and Hostavin 3058 Liq. and Hostavin 3068 Liq. , both available from Clariant Japan K.K.

Moreover, many commercially available HALSs are poorly miscible with water, and often deteriorate the appearance properties such as gloss when added to aqueous coating materials.

To solve this problem, HALSs previously dispersed in water are available. Examples thereof include TINUVIN 123-DW (available from BASF JAPAN Ltd.) prepared by dispersing TINUVIN 123 in water, and SDX-2987 (trial product by ADEKA Corporation) prepared by dispersing ADK STAB LA-81 in water.

Another solution may be to prepare a two-component or multicomponent resin composition for an aqueous coating material by previously mixing a HALS with (B5) a water-soluble and/or water-dispersible curing agent containing a reactive functional group and a hydrophilic group within the molecule described later to prepare an auxiliary agent, and mixing the auxiliary agent with a base material containing (A1) water-soluble and/or water-dispersible resin before use.

The miscibility of a HALS can be greatly improved by adding to the base material the HALS together with (B5) water-soluble and/or water-dispersible curing agent containing a reactive functional group and a hydrophilic group within the molecule, which is surface-active and is highly compatible with HALSs.

This addition method also allows the use of high-molecular-weight HALSs or solid HALSs, which have been difficult to apply to conventional aqueous coating materials due to the problem of miscibility.

Moreover, the combined use of a HALS having a molecular weight less than 600 and a HALS having a molecular weight of 600 or more can further improve the appearance properties such as gloss.

The amount of (B3) hindered amine light stabilizer (HALS) having a logarithm (pKa) of the reciprocal of acid dissociation constant of 7 or less is preferably 0.1 to 10 parts by weight, more preferably 0.3 to 7 parts by weight, and particularly preferably 1 to 4 parts by weight, per 100 parts by weight of total solids of (A1) water-soluble and/or water-dispersible resin. If the amount is less than 0.1 parts by weight, the effect of improving weather resistance is insufficient. If the amount is more than 10 parts by weight, stain resistance, and hardness of the coating film is lowered.

### [(B4) Organosilane represented by Formula (1) and/or hydrolysis condensate thereof]

The (B4) organosilane and/or hydrolysis condensate thereof refers to a compound represented by Formula (1) and/or its hydrolysis condensate, and can be added to a coating material containing (A1) water-soluble and/or water-dispersible resin to improve weather resistance.

Si(R²)ₙ(OR¹)₄₋ₙ (1)

wherein R¹s are the same as or different from each other and each represent a C1-C4 alkyl group; R²(s), which may be the same as or different from each other, each represents a C2-C8 monovalent organic group; and n represents 1 or 2.

Not containing a methyl group directly bonded to a silicon atom, the component (B4) does not give water repellency to the resulting coating film and does not deteriorate stain resistance, but on the contrary can improve stain resistance.

In the organosilane shown in the formula, R¹ is a C1-C4 alkyl group; it is generally known that such a group with a smaller carbon number results in higher reactivity. In the case of being added to an aqueous coating material, the organosilane with a methyl group having a small carbon number is so highly reactive that the time needed for the coating material to gelate (i.e. , pot life) is shortened. In contrast, in the case of using a butyl group having a large carbon number, a less amount of stain resistance is imparted to the coating material while pot life is extended. When considering the balance between stain resistance and pot life, in cases where an alkyl moiety having a carbon number of 1 is present in combination with an alkyl moiety having a carbon number of 2, 3, or 4, those with a carbon number of 2 and with a carbon number of 3 or 4 are preferably present together. The carbon number is preferably 1.5 to 2.8, particularly preferably 1.8 to 2.5, and further preferably 2 to 2.2 on average. A silicate having equal numbers of methyl and ethyl groups is considered to correspond to an alkyl moiety having 1.5 carbons.

Moreover, R² is a C2-C8 substituted or unsubstituted organic group, and examples thereof include: C2-C8 alkyl groups (e. g. ethyl, n-propyl, and i-propyl groups), and alkenyl groups (e.g. vinyl, allyl, and methallyl groups), as well as C2-C8 substituted organic groups such as halogenated alkyl groups (e.g. γ-chloropropyl and 3,3,3-trifluoropropyl groups); epoxyalkyl groups (e.g. γ-glycidoxypropyl and 3,9-epoxycyclohexylethyl groups); (meth)acryloxyalkyl groups (e.g. γ-methacryloxypropyl group); mercaptoalkyl groups (e.g. γ-mercaptopropyl group); aryl groups (e.g. phenyl group); and amino group-containing alkyl groups (e.g. γ-aminopropyl group).

Specific examples of such organosilanes include ethyltrimethoxysilane, ethyltriethoxysilane, n-propyltrimethoxysilane, n-propyltriethoxysilane, i-propyltrimethoxysilane, i-propyltriethoxysilane, γ-chloropropyltrimethoxysilane, γ-chloropropyltriethoxysilane, vinyltrimethoxysilane, vinyltriethoxysilane, 3,3,3-trifluoropropyltrimethoxysilane, 3,3,3-trifluoropropyltriethoxysilane, γ-glycidoxypropyltrimethoxysilane, γ-glycidoxypropyltriethoxysilane, γ-methacryloxypropyltrimethoxysilane, γ-methacryloxypropyltriethoxysilane, γ-mercaptopropyltrimethoxysilane, γ-mercaptopropyltriethoxysilane, phenyltrimethoxysilane, phenyltriethoxysilane, γ-aminopropyltrimethoxysilane, 3,4-epoxycyclohexylethyltrimethoxysilane, 3,4-epoxycyclohexylethyltriethoxysilane, diethyldimethoxysilane, diethyldiethoxysilane, diphenyldimethoxysilane, and diphenyldiethoxysilane, and/or hydrolysis condensates thereof.

In particular, preferred are hydrolysis condensates, preferably having a condensation degree of about 1 to 20. The condensation degree is more preferably in a range from 3 to 15.

Specific examples of the hydrolysis condensate include Dynasylan 6490 and Dynasylan 6498 (both available from Evonik Degussa Japan) which are hydrolysis condensates of vinylsilane, Dynasylan 6598 (available from Evonik Degussa Japan) which is a hydrolysis condensate of vinylsilane and alkylsilane, Dynasylan 1146 (available from Evonik Degussa Japan) which is a hydrolysis condensate of aminosilane and alkylsilane, Dynasylan 9896 (available from Evonik Degussa Japan) which is a hydrolysis condensate of alkylsilane, KR-217 (available from Shin-Etsu Chemical Co., Ltd.) which is a hydrolysis condensate of phenylsilane, X-41-1053 (available from Shin-Etsu Chemical Co., Ltd.) which is a hydrolysis condensate of epoxysilane, and X-41-1805 (available from Shin-Etsu Chemical Co., Ltd.) which is a hydrolysis condensate of mercaptosilane.

Preferred among these are Dynasylan 6490, Dynasylan 6598, X-41-1053, and X-41-1805, in which R¹ is an ethyl group or a mixture of methyl and ethyl groups.

More preferred are Dynasylan 6490 and Dynasylan 6598 which are condensates containing a vinylsilane.

Each of the above compounds may be used alone, or two or more thereof may be used in combination.

The combined amount of (B4) organosilane and/or condensate thereof and (B1) organosilicate and /or modified product thereof is preferably 2 to 40 parts by weight per 100 parts by weight of total solids of (A1) water-soluble and/or water-dispersible resin. If the combined amount is less than 2 parts by weight, weather resistance and stain resistance tend to be insufficient. If the combined amount is more than 40 parts by weight, the gloss of the coating film tends to be reduced. The combined amount is more preferably 5 to 20 parts by weight. The amount of (B4) organosilane and/or condensate thereof alone, not combined with the component (B1), is preferably 0 to 30 parts by weight, more preferably 1 to 20 parts by weight, and particularly preferably 5 to 15 parts by weight, per 100 parts by weight of total solids of (A1) water-soluble and/or water-dispersible resin.

The mixing ratio of (B4) organosilane and/or condensate thereof and (B1) organosilicate and/or modified product thereof is preferably 9/1 to 0/10, more preferably 98/2 to 2/8, and particularly preferably 7/3 to 4/6.

### [(B5) Water-soluble and/or water-dispersible curing agent containing reactive functional group and hydrophilic group within molecule]

The water-soluble and/or water-dispersible curing agent containing a reactive functional group and a hydrophilic group within the molecule refers to a substance containing a reactive functional group in addition to a hydrophilic group and a hydrophobic group.

The reactive functional group can be allowed to react with the resin component and/or other compounding agents incorporated in the aqueous coating material, and even to react by itself, thereby emulsifying and dispersing (B1) organosilicate, (B4) organosilane and/or hydrolysis condensate thereof, and (B3) HALS in water without lowering the water resistance of the resulting coating film (or rather, while improving the water resistance). The reactive functional group may be the same as the hydrophilic group or hydrophobic group. Specific examples of the reactive functional group include (block) isocyanate, epoxy, carbodiimide, alkoxysilyl, oxazoline, hydrazide, allyl, propenyl, (meth)acryloyl, and vinyl groups.

Examples of (block) isocyanate group-containing compounds include 2,4-tolylene diisocyanate (2,4-TDI), 2,6-tolylene diisocyanate (2,6-TDI), 4,4'-diphenylmethane diisocyanate (MDI), xylylene diisocyanate (XDI), isophorone diisocyanate (IPDI), methylcyclohexyl diisocyanate (H6TDI), 4,4'-dicyclohexylmethane diisocyanate (H12MDI), 1,3-bis(isocyanatomethyl)cyclohexane (H6XDI), tetramethylxylylene diisocyanate (TMXDI), 2,2,4-trimethylhexamethylene diisocyanate (TMHDI), hexamethylene diisocyanate (HDI), norbornene diisocyanate (NBDI), 2,4,6-triisopropylphenyl diisocyanate (TIDI), 1,12-diisocyanatododecane (DDI), 2,4-bis-(8-isocyanatooctyl)-1,3-dioctyl-cyclobutane (OCDI), and n-pentane-1,4-diisocyanate, and isocyanurate-, adduct-, biuret-, or allophanate-modified products thereof, as well as their polymers having one or more isocyanate groups, modified with a polyalkylene oxide group, carboxyl group or the like to have water-solubility and/or water-dispersibility. In addition, the isocyanate group of these compounds may be masked with a blocking agent (e.g. phenol·ε-caprolactam). In particular, preferred in terms of weather resistance are those including non-yellowing or hardly yellowing isocyanates.

They are usually commercially available as crosslinking agents, and examples thereof include: Bayhydur 305, Bayhydur XP2655, Bayhydur 401-70, Bayhydur 304, Bayhydur 3100, Bayhydur 2336, Bayhydur LS2150/1, Bayhydur 302, Bayhydur XP2451, Bayhydur XP2451/1, Bayhydur 2547, Bayhydur 2487/1, Bayhydur DN, Bayhydur DA-L, Bayhydur XP2759, Bayhydur BL116, Bayhydur BL5140, Bayhydur BL5235, Bayhydur TPLS2186, Bayhydur BL2781XP, Bayhydur BLXP2706, Bayhydur BL2805XP, and Bayhydrol TPLS2153, all available from Sumika Bayer Urethane Co., Ltd.; Takenate WD-220, Takenate WD-240, Takenate WD-720, Takenate WD-725, Takenate WD-726, Takenate WD-730, Takenate WB-700, Takenate WB-720, Takenate WB-730, and Takenate WB-920, all available from MITSUI CHEMICALS POLYURETHANES, INC.; AQUANATE 100, AQUANATE 110, AQUANATE 200, AQUANATE 210, and AQUANATE 120, all available from NIPPON POLYURETHANE INDUSTRY CO. , LTD. ; Duranate WB40-100, Duranate WB40-80D, Duranate WT20-100, and Duranate WT30-100, all available from Asahi Kasei Chemicals Corporation; Easaqua WAT-3, Easaqua WAT-4, Easaqua XM 501, Easaqua XM 502, Easaqua WXD 401, Easaqua XD 803, and Easaqua XL-600, all available from Vencorex chemicals; VESTANAT EP-DS 1205 and VESTANAT EP-DS 1076, both available from Evonik Degussa Japan; and TZ-1300, TZ-1301, TZ-1310, TZ-1312, TZ-1320, TZ-1322, TZ-1370, and TZ-1372, all available from Hokko Chemicals Co., Ltd.

Also usable are copolymers of a (block) isocyanate group-containing vinyl monomer, a hydrophilic group-containing vinyl monomer, and other vinyl monomers.

Examples of the (block) isocyanate group-containing vinyl monomers include 2-methacryloyloxyethyl isocyanate, 2-(O-[1'-methylpropylideneamino]carboxyamino)ethyl methacrylate, and m-isopropenyl-α,α-dimethylbenzyl isocyanate.

Examples of the hydrophilic group-containing vinyl monomers include α,β-ethylenically unsaturated carboxylic acids, styrenesulfonic acid, vinylsulfonic acid, sodium styrenesulfonate, sodium 2-sulfoethyl(meth)acrylate, (meth)acrylamide, N-methylol (meth)acrylamide, dialkylaminoalkyl (meth)acrylates, dialkylaminoalkyl (meth)acrylate hydrochlorides, 2-aminoethyl (meth)acrylate hydrochloride, and polyoxyalkylene chain-containing vinyl monomers.

Examples of the α, β-ethylenically unsaturated carboxylic acids include (meth) acrylic acid, itaconic acid, maleic acid, crotonic acid, phthalic acid, and citraconic acid.

Examples of the dialkylaminoalkyl (meth)acrylates and dialkylaminoalkyl (meth)acrylate hydrochlorides include dimethylaminoethyl(meth)acrylate, diethylaminoethyl (meth)acrylate, and dimethylaminopropyl (meth)acrylate, and hydrochlorides thereof.

The polyoxyalkylene chain-containing vinyl monomer is not particularly limited, and is preferably a polyoxyalkylene chain-containing acrylic or methacrylic acid ester. Specific examples thereof include:BLEMMER PE-90, PE-200, PE-350, AE-90, AE-200, AE-350, PP-500, PP-800, PP-1000, AP-400, AP-550, AP-800, 700PEP-350B, 10PEP-550B, 55PET-400, 30PET-800, 55PET-800, 30PPT-800, 50PPT-800, 70PPT-800, PME-100, PME-200, PME-400, PME-1000, PME-4000, AME-400, 50POEP-800B, 50AOEP-800B, AEP, AET, APT, PLE, ALE, PSE, ASE, PKE, AKE, PNE, ANE, PNP, ANP, and PNEP-600, all available from NOF CORPORATION; LIGHT ESTER 130MA, 041MA and MTG, LIGHT ACRYLATE EC-A, MTG-A, 130A, DPM-A, P-200A, NP-4EA, NP-8EA, and EHDG-A, all available from KYOEISHA CHEMICAL CO., LTD.; MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, and RA-1820, all available from Nippon Nyukazai Co. , Ltd.; NK-ESTER M-20G, M-40G, M-90G, M-230G, AMP-10G, AMP-20G, AMP-60G, AM-90G, and LA, all available from SHIN-NAKAMURA CHEMICAL CO., LTD.; and ELEMINOL RS-30 and RS-3000, both available from Sanyo Chemical Industries, Ltd.

Many epoxy group-containing compounds are commercially available, and examples thereof include: DENACOL EX-611, EX-612, EX-614, EX-614B, EX-622, EX-512, EX-521, EX-411, EX-421, EX-301, EX-313, EX-314, EX-321, EX-211, EX-810, EX-811, EX-851, EX-821, EX-830, EX-832, EX-841, EX-861, EX-911, EX-941, EX-920, EX-921, EX-931, EX-145, EX-171, and EX-701, all available from Nagase ChemteX Corporation; Epolite 40E, Epolite 100E, Epolite 200E, Epolite 400E, Epolite 70P, Epolite 200P, Epolite 400P, Epolite 1500NP, Epolite 80MF, and Epolite 100MF, all available from KYOEISHA CHEMICAL CO., LTD.; SR-NPG, SR-16H, SR-TMP, SR-TPG, SR-4PG, SR-2EG, SR-8EG, SR-8EGS, SR-GLG, SR-DGE, SR-4GL, and SR-4GLS, all available from Sakamoto Yakuhin Kogyo Co., Ltd.; and EPIOL BE-200, G-100, E-100, E-400, E-1000, P-200, NPG-100, TMP-100, and EPIOL OH, all available from NOF CORPORATION.

Also usable are copolymers of an epoxy group-containing vinyl monomer, a hydrophilic group-containing vinyl monomer, and other vinyl monomers.

Examples of the epoxy group-containing vinyl monomers include glycidyl (meth)acrylate, glycidyl vinyl ether, and 3,4-epoxycyclohexyl (meth) acrylate; and M-GMA, Cyclomer M-100, Cyclomer A-200, Cyclomer M-101, and Celloxide 2000, all available from Daicel Corporation.

Examples of the carbodiimide group-containing compounds include the water-soluble or self-emulsifying carbodiimide compounds disclosed in JP-A H08-59303.

These compounds are prepared by carbodiimidizing one or two or more kinds of polyfunctional isocyanates by carbon dioxide elimination and condensation reactions, and blocking the remaining terminal isocyanate group with a hydrophilic group. Examples of the polyfunctional isocyanates include 2,4-tolylene diisocyanate (2,4-TDI), 2,6-tolylene diisocyanate (2,6-TDI), 4,4'-diphenylmethane diisocyanate (MDI), xylylene diisocyanate (XDI), isophorone diisocyanate (IPDI), methylcyclohexyl diisocyanate (H6TDI), 4,4'-dicyclohexylmethane diisocyanate (H12MDI), 1,3-bis(isocyanatomethyl)cyclohexane (H6XDI), tetramethylxylylene diisocyanate (TMXDI), 2,2,4-trimethylhexamethylene diisocyanate (TMHDI), hexamethylene diisocyanate (HDI), norbornene diisocyanate (NBDI), 2,4,6-triisopropylphenyl diisocyanate (TIDI), 1,12-diisocyanatododecane (DDI), 2,4-bis-(8-isocyanatooctyl)-1,3-dioctyl-cyclobutane (OCDI), and n-pentane-1,4-diisocyanate.

Examples of hydrophilic groups that can be used for blocking include residues of alkylsulfonate salts; quaternary salts of residues of dialkylaminoalcohols; and residues of alkoxy end-blocked polyoxyalkylenes.

They are commercially available as aqueous resin crosslinking agents. Examples thereof include: CARBODILITE V-02, V-04, V-06, V-02-L2, E-01, E-02, E-03, E-04, and E-05, all available from Nisshinbo Chemical Inc. ; and Desmodur XP2802 available from Sumika Bayer Urethane Co., Ltd.

Examples of those not containing water include V-02B, V-04B, V-04K, and Elastostab H01.

Examples of the alkoxysilyl group-containing compounds include A-1230, MAC-2101, and MAC-2301, all available from Momentive Performance Materials JAPAN.

They may also be prepared by reacting a terminal hydroxy group of a polyoxyalkylene with an isocyanate silane coupling agent.

The polyoxyalkylene is not particularly limited as long as it is terminated with one or more hydroxy groups.

Examples of the isocyanate silane coupling agents include: A-1310 and Y-5187, both available from Momentive Performance Materials JAPAN; and KBE-9007 available from Shin-Etsu Chemical Co., Ltd.

Alternatively, they may be prepared by reacting an epoxy group-containing compound mentioned above with an amino silane coupling agent.

Examples of the amino silane coupling agents include: γ-aminopropyltriethoxysilane, γ-aminopropyltrimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane, and γ-phenylaminopropyltrimethoxysilane; KBE-9103, KBM-575, and KBM-6123, all available from Shin-Etsu Chemical Co., Ltd; and A-1102, A-1122, and A-1170, all available from Momentive Performance Materials JAPAN.

Also usable are copolymers of an alkoxysilyl group-containing vinyl monomer, a hydrophilic group-containing vinyl monomer, and other vinyl monomers.

Specific examples of the alkoxysilyl group-containing vinyl monomer include vinyltrimethoxysilane, vinylmethyldimethoxysilane, vinyltriethoxysilane, vinylmethyldiethoxysilane, vinyltris(2-methoxyethoxy)silane, vinyltriisopropoxysilane, γ-(meth)acryloyloxypropyltrimethoxysilane, γ-(meth)acryloyloxypropylmethyldimethoxysilane, γ-(meth)acryloyloxypropyltriethoxysilane, γ-(meth)acryloyloxypropylmethyldiethoxysilane, γ-(meth)acryloyloxypropyltri-n-propoxysilane, γ-(meth)acryloyloxypropyltriisopropoxysilane, vinyltriacetoxysilane, and β-(meth)acryloyloxyethyltrimethoxysilane.

Oxazoline group-containing compounds are commercially available as aqueous crosslinking agents, and examples thereof include EPOCROS WS-500, K-2010E, K-2020E, K-2030E, K-1010E, K-1020E, and K-1030E, all available from NIPPON SHOKUBAI CO., LTD.

Examples of the hydrazide group-containing compounds include carbohydrazide, adipic acid dihydrazide, sebacic acid dihydrazide, dodecanediohydrazide, and aminopolyacrylamide.

The (B5) water-soluble and/or water-dispersible curing agent containing a reactive functional group and a hydrophilic group within the molecule, (B1) organosilicate and/or modified product thereof, (B2) curing catalyst that promotes a hydrolysis/condensation reaction of an alkoxysilyl group, (B4) organosilane and/or hydrolysis condensate thereof, and (B3) hindered amine light stabilizer (HALS) having a logarithm (pKa) of the reciprocal of acid dissociation constant of 7 or less are mixed in advance to prepare an auxiliary agent (II). Just before application, the auxiliary agent (II) is mixed with a base material (I) containing (A1) water-soluble and/or water-dispersible resin and (A2) heat-shielding pigment, whereby a coating film having very good appearance and excellent weather resistance and stain resistance can be formed.

The amount of (B5) water-soluble and/or water-dispersible curing agent containing a reactive functional group and a hydrophilic group is 5 to 300 parts by weight, preferably 10 to 200 parts by weight, and more preferably 20 to 100 parts by weight, per 100 parts by weight of the total of (B1) organosilicate and/or modified product thereof and (B4) organosilane and/or hydrolysis condensate thereof. If the amount is less than 5 parts by weight, (B1) organosilicate and/or modified product thereof, (B4) organosilane and/or hydrolysis condensate thereof, (B3) HALS, and (B2) curing catalyst will not homogeneously dispersed in the coating material, resulting in a coating film having a reduced level of gloss. If the amount is above 300 parts by weight, a coating film having a reduced hardness will be formed.

Moreover, an acetylene glycol surfactant and/or a product of similar structure may be used in combination to improve gloss and reduce surface tackiness. Specific examples of the acetylene glycol surfactant and/or product of similar structure include Surfynol 104, 104E, 104H, 104A, 104BC, 104DPM, 104PA, 104PG-50, 104S, 420, 440, 465, 485, SE, SE-F, 504, 61, 2502, 82, DF110D, DF37, CT111, CT121, CT131, CT136, TG, GA, and FS-85, Dynol 604, Enviro Gem AD-01, and Olfine STG, SPC, E1004, E1010, AK-02, PD-001, PD-002W, PD-004, PD-301, WE-001, WE-002, WE-003, AF-103, and AF-104, all available from Nissin Chemical Industry Co., Ltd. From the viewpoint of reducing surface tackiness, particularly preferred among these are Surfynol 104 series, Surfynol 2502, and Enviro Gem AD-01, in which ethylene oxide is not added.

The aqueous coating material thus obtained may optionally contain pigments other than heat-shielding pigments, extender pigments, film-forming aids such as alcohols (e.g. benzyl alcohol), glycols (e.g. ethylene glycol monobutyl ether, propylene glycol monomethyl ether, propylene glycol monobutyl ether, dipropylene glycol monomethyl ether, dipropylene glycol monobutyl ether, ethylene glycol mono(2-ethylhexyl) ether), and glycol esters (e.g. ethylene glycol monobutyl ether acetate, 2,2,4-trimethyl-1,3-pentanediol monoisobutyrate), and other additives commonly used in coating materials, such as colloidal silica, plasticizers, solvents, dispersants, wetting agents, thickeners, preservatives, antifungal agents, algicides, antifreezing agents, light stabilizers, ultraviolet absorbers, defoamers, and matting agents.

Aqueous coating compositions according to the present invention can be used for the coating of various objects, such as architecture (e.g. buildings, detached houses, apartment houses, factory buildings, hospitals, schools, gas stations), structures (e.g. bridges, civil structures, plants, marine structures, floodgates, steel towers, large pipes, pools), building materials (e.g. sashes, fittings, various boards, inorganic building materials), ships, metal products (e.g. PCM, metal furniture, containers, guard rails, bicycle members, fences, food cans, drum cans, cylinders, gas appliances, kerosene heaters), road vehicles (e.g. passenger cars, trucks, buses, motorbikes), electric machines (e.g. household electrical appliances, heavy electric machines, electronic machines, office machineries, communication devices, measuring instruments, freezers, lighting fixtures, vending machines, computer-related devices), machineries (e.g. industrial machines, agricultural machines, construction machines, railway vehicles, aircrafts) and wood products (e.g. plywood, furniture, musical instruments).

### EXAMPLES

The present invention is described in the following by reference to the following examples 2 to 6, 11 to 17, 36 and 37; examples 1, 7 to 10, 18 to 35 and 38 to 40 being reference examples. The scope of the present invention is not limited by the examples.

### [Synthesis of (A1) water-soluble and/or water-dispersible resin (Synthesis Example 1)]

A reaction vessel equipped with a stirrer, a reflux condenser, a nitrogen gas introduction pipe, and an addition funnel was charged with 195 parts by weight of deionized water, 1.4 parts by weight of Newcol-707SN (available form Nippon Nyukazai Co., Ltd., 30% of active ingredient), and 1.0 part by weight of a 5% sodium hydrogen carbonate aqueous solution. The mixture was heated to 50°C while nitrogen gas was introduced into the vessel. After the heating, to the mixture were added 2.0 parts by weight of a 7% t-butyl hydroperoxide aqueous solution, 2.8 parts by weight of a ferrous sulfate heptahydrate (0.10%)/disodium ethylenediaminetetraacetate (0.40%) mixed aqueous solution, and 1.8 parts by weight of a 10% Bruggolite FF-6 aqueous solution. To the mixture was added over 200 minutes at a constant speed a monomer emulsion prepared by adding, to a monomer mixture as shown in the core part column of A1-1 in Table 1, 12 parts by weight of Adeka Reasoap SR-1025 (available from ADEKA Corporation, 25% of active ingredient), 1.9 parts by weight of Adeka Reasoap ER-20 (available from ADEKA Corporation, 75% of active ingredient), and 63 parts by weight of deionized water and emulsifying them. During that period, 2.2 parts by weight of a 7% t-butyl hydroperoxide aqueous solution and 2.8 parts by weight of a 2.5% Bruggolite FF-6 aqueous solution were added in two batches. After completion of the addition of the monomer emulsion, post polymerization was carried out for an hour.

Then 1.1 parts by weight of a 7% t-butyl hydroperoxide aqueous solution and 3.0 parts by weight of a 2.5% Bruggolite FF-6 aqueous solution were added. To the mixture was added over 220 minutes at a constant speed a monomer emulsion prepared by adding, to a monomer/chain transfer agent mixture as shown in the shell part column of A1-1 in Table 1, 12 parts by weight of Adeka Reasoap SR-1025 (available from ADEKA Corporation, 25% of active ingredient), 1.8 parts by weight of Adeka Reasoap ER-20 (available from ADEKA Corporation, 75% of active ingredient), and 63 parts by weight of deionized water and emulsifying them. During that period, 1.9 parts by weight of a 7% t-butyl hydroperoxide aqueous solution and 2.8 parts by weight of a 2.5% Bruggolite FF-6 aqueous solution were added in three batches. After completion of the addition, post polymerization was carried out for 1.5 hours. After 22 parts by weight of a 5% sodium hydrogen carbonate aqueous solution was added to the resulting emulsion, deionized water was added so that the solid content concentration of the emulsion was adjusted to 50% (A1-1).

### [Synthesis of (A1) water-soluble and/or water-dispersible resin (Synthesis Example 2)]

A reaction vessel equipped with a stirrer, a reflux condenser, a nitrogen gas introduction pipe, and an addition funnel was charged with 152 parts by weight of deionized water, 0.4 parts by weight of Adeka Reasoap SR-1025 (available from ADEKA Corporation, 25% of active ingredient), and 1.0 part by weight of a 5% sodium hydrogen carbonate aqueous solution. The mixture was heated to 50°C while nitrogen gas was introduced into the vessel. After the heating, to the mixture were added 2.0 parts by weight of a 7% t-butyl hydroperoxide aqueous solution, 2.8 parts by weight of a ferrous sulfate heptahydrate (0.10%)/disodium ethylenediaminetetraacetate (0.40%) mixed aqueous solution, and 1.4 parts by weight of a 10% Bruggolite FF-6 aqueous solution. To the mixture was added over 160 minutes at a constant speed an monomer emulsion prepared by adding, to a monomer mixture as shown in the core part column of A1-2 in Table 1, 9.0 parts by weight of Adeka Reasoap SR-1025 (available from ADEKA Corporation, 25% of active ingredient), 1.6 parts by weight of Adeka Reasoap ER-20 (available from ADEKA Corporation, 75% of active ingredient), and 57 parts by weight of deionized water and emulsifying them. During that period, 1.2 parts by weight of a 7% t-butyl hydroperoxide aqueous solution and 2.4 parts by weight of a 2.5% Bruggolite FF-6 aqueous solution were added in two batches. After completion of the addition of the monomer emulsion, post polymerization was carried out for two hours. During this period, 1.2 parts by weight of a 7% t-butyl hydroperoxide aqueous solution and 1.8 parts by weight of a 2.5% Bruggolite FF-6 aqueous solution were added in three batches.

Then 1.2 parts by weight of a 7% t-butyl hydroperoxide aqueous solution and 3.2 parts by weight of a 2.5% Bruggolite FF-6 aqueous solution were added. To the mixture was added over 240 minutes at a constant speed a monomer emulsion prepared by adding, to a monomer/chain transfer agent mixture as shown in the shell part column of A1-2 in Table 1, 14 parts by weight of Adeka Reasoap SR-1025 (available from ADEKA Corporation, 25% of active ingredient), 2.4 parts by weight of Adeka Reasoap ER-20 (available from ADEKA Corporation, 75% of active ingredient), and 86 parts by weight of deionized water and emulsifying them. During that period, 2.0 parts by weight of a 7% t-butyl hydroperoxide aqueous solution and 3.2 parts by weight of a 2.5% Bruggolite FF-6 aqueous solution were added in two batches. After completion of the addition, post polymerization was carried out for 1.5 hours. During this period, 0.8 parts by weight of a 7% t-butyl hydroperoxide aqueous solution and 1.2 parts by weight of a 2.5% Bruggolite FF-6 aqueous solution were added in two batches. After 24 parts by weight of a 5% sodium hydrogen carbonate aqueous solution was added to the resulting emulsion, deionized water was added so that the solid content concentration of the emulsion was adjusted to 50% (A1-2).

### [(A1) Synthesis of water-soluble and/or water-dispersible resin (Synthesis Example 3)]

A reaction vessel equipped with a stirrer, a reflux condenser, a nitrogen gas introduction pipe, and an addition funnel was charged with 158 parts by weight of deionized water, 0.5 parts by weight of Adeka Reasoap SR-1025 (available from ADEKA Corporation, 25% of active ingredient), and 1.0 part by mass of a 5% sodium hydrogen carbonate aqueous solution. The mixture was heated to 50°C while nitrogen gas was introduced into the vessel. After the heating, to the mixture were added 2.0 parts by weight of a 7% t-butyl hydroperoxide aqueous solution, 2.8 parts by weight of a ferrous sulfate heptahydrate (0.10%)/disodium ethylenediaminetetraacetate (0.40%) mixed aqueous solution, and 1.4 parts by weight of a 10% Bruggolite FF-6 aqueous solution. To the mixture was added over 280 minutes at a constant speed a monomer emulsion prepared by adding, to a monomer mixture as shown in the core part column of A1-3 in Table 1, 17 parts by weight of Adeka Reasoap SR-1025 (available from ADEKA Corporation, 25% of active ingredient), 2.6 parts by weight of Adeka Reasoap ER-20 (available from ADEKA Corporation, 75% of active ingredient), and 100 parts by weight of deionized water and emulsifying them. During that period, 2.8 parts by weight of a 7% t-butyl hydroperoxide aqueous solution and 6.0 parts by weight of a 2.5% Bruggolite FF-6 aqueous solution were added in five batches. After completion of the addition of the monomer emulsion, post polymerization was carried out for an hour.

Then 1.0 part by weight of a 7% t-butyl hydroperoxide aqueous solution and 2.4 parts by weight of a 2.5% Bruggolite FF-6 aqueous solution were added. To the mixture was added over 120 minutes at a constant speed a monomer emulsion prepared by adding, to a monomer/chain transfer agent mixture as shown in the shell part column of A1-3 in Table 1, 7.2 parts by weight of Adeka Reasoap SR-1025 (available from ADEKA Corporation, 25% of active ingredient), 1.1 parts by weight of Adeka Reasoap ER-20 (available from ADEKA Corporation, 75% of active ingredient), and 43 parts by weight of deionized water and emulsifying them. During that period, 1.4 parts by weight of a 7% t-butyl hydroperoxide aqueous solution and 2.0 parts by weight of a 2.5% Bruggolite FF-6 aqueous solution were added in two batches. After completion of the addition, post polymerization was carried out for 1.5 hours. After 22 parts by weight of a 5% sodium hydrogen carbonate aqueous solution was added to the resulting emulsion, deionized water was added so that the solid content concentration of the emulsion was adjusted to 50% (A-3).

**[Table 1]**

| Monomer/chain transfer agent composition used in preparation of (A1) resin | | | | |
|---|---|---|---|---|
| | Monomer, chain transfer agent | A1-1 | A1-2 | A1-3 |
| Core part | 2-Ethylhexyl acrylate | 48.0 | | 204.0 |
| | Isobutyl methacrylate | 148.0 | | 4.0 |
| | Butyl) methacrylate | | 68.0 | 71.0 |
| | Butyl acrylate | | 40.0 | |
| | Styrene | | 49.0 | |
| | γ-Methacryloxypropylmethyldimethoxysilane | 4.0 | 3.0 | 1.0 |
| | Subtotal | 200.0 | 160.0 | 280.0 |
| Shell part | Methyl methacrylate | 18.0 | 56.0 | 20.0 |
| | Butyl methacrylate | 167.0 | 146.0 | 79.8 |
| | Butyl acrylate | | 8.0 | |
| | 2-Hydroxyethyl methacrylate | | 6.4 | |
| | Glycidyl methacrylate | | 6.4 | 7.2 |
| | γ-Methacryloxypropyltriethoxysilane | 2.0 | 4.0 | 0.4 |
| | BLEMMER PE-350 *1 | 12.0 | 12.0 | 12.0 |
| | n-Dodecyl mercaptan | 1.0 | 1.2 | 0.6 |
| | Subtotal | 200.0 | 240.0 | 120.0 |
| | Total | 400.0 | 400.0 | 400.0 |

| | | | | |
|---|---|---|---|---|
| *1 Polyoxyethylene chain (including 8 repeating units) -containing hydrophilic vinyl monomer (available from NOF Corporation) | | | | |

The figures in the table are shown in parts by weight.

### [Preparation example of base material (I)]

Base materials (I) were prepared according to the formulations shown in Table 3 using the synthesized resin compositions A1-1 to A1-3 and a commercial fluororesin emulsion, and pigment pastes shown in Table 2 and commercial pigment pastes.

**[Table 2]**

| Formulation of pigments paste | | | | |
|---|---|---|---|---|
| Use | Material | Maker | MB-1 | MB-2 |
| Deionized water | | - | 5.6 | 5.6 |
| Antifreezing agent | Propylene glycol | - | 2.0 | 2.0 |
| Wetting dispersant | SOLSPERSE | The Lubrizol Corporation | 0.7 | 0.7 |
| | Hydropalat 3037 | Cognis Japan Ltd. | 0.2 | 0.2 |
| Titanium dioxide | TITANIX JR-1000 | TAYCA | 20.2 | |
| | PFC105 | ISHIHARA SANGYO KAISHA LTD. | | 20.2 |
| Preservative | Surauto 99N | Japan EnviroChemicals.ltd. | 0.2 | 0.2 |
| Defoamer | AGITAN 295 | MUNZING CHEMIE | 0.1 | 0.1 |
| Total | | | 29.0 | 29.0 |

The figures in the table are shown in parts by weight.

TITANIX JR-1000: Infrared-shielding titanium dioxide (average particle size: 1 µm, surface treatment: aluminum oxide) available from TAYCA
PFC105: Highly weather-resistant titanium dioxide (average particle size: 0.28 µm, surface treatment: silicon dioxide, aluminum oxide, zirconium dioxide, organic substance) available from ISHIHARA SANGYO KAISHA, LTD.

**[Table 3]**

| Formulation 1 of base material (I) | | | | | | | | | | | | | | | | | | |
|---|---|---|---|---|---|---|---|---|---|---|---|---|---|---|---|---|---|---|
| Use | Material | Maker | W-1 | Bk-1 | Bk-2 | Bk-3 | Bk-4 | Bk-5 | N7-1 | N7-2 | N7-3 | N7-4 | N7-5 | N8-3 | N6-3 | N5-3 | N4-3 | W-2 |
| (A2) | MB-1 | | 29.00 | | | | | | 27.99 | 27.55 | 24.94 | 25.38 | 26.83 | 27.26 | 20.30 | 14.50 | 8.70 | 27.04 |
| | LIOFAST SF696 Black | TOYOCHEM Co., Ltd | | | 9.50 | | | | | 0.48 | | | | | | | | |
| | LIOFAST SF698 Black | TOYOCHEM Co., Ltd. | | | | 9.50 | | | | | 1.33 | | | 0.57 | 2.85 | 4.75 | 6.65 | |
| | MF-4581 Black | Dainichiseika Color & Chemicals Mfg.Co., Ltd. | | | | | 11.00 | | | | | 1.38 | | | | | | |
| | AF Black E-40 | Dainichiseika Color & Chemicals Mfg.Co., Ltd. | | | | | | 6.50 | | | | | 0.49 | | | | | |
| Pigment paste | LIOFAST M-232A Black | TOYOCHEM Co., Ltd. | | 6.50 | | | | | 0.23 | | | | | | | | | |
| (A1) | A1-1 | | 60.00 | 79.02 | 76.48 | 76.48 | 75.21 | 79.02 | 60.67 | 60.82 | 62.31 | 61.90 | 61.43 | 60.99 | 64.94 | 68.24 | 71.54 | 33.00 |
| | Lumiflon FE-4300 | ASAHI GLASS CO., LTD. | | | | | | | | | | | | | | | | 31.28 |
| | EHG | Nippon Nyukazai Co., Ltd. | 6.00 | 7.90 | 7.65 | 7.65 | 7.52 | 7.90 | 6.07 | 6.08 | 6.23 | 6.19 | 6.14 | 6.10 | 6.50 | 6.83 | 7.16 | 3.30 |
| Film-forming aid | CS-12 | JNC Corporation | | | | | | | | | | | | | | | | 2.34 |
| Thickener | SN thickner 612N | SAN NOPCO LIMITED | 0.15 | 0.20 | 0.19 | 0.19 | 0.19 | 0.20 | 0.15 | 0.15 | 0.16 | 0.16 | 0.15 | 0.15 | 0.16 | 0.17 | 0.18 | 0.08 |
| | Rheolate 288 | Elementis plc | | | | | | | | | | | | | | | | 0.05 |
| | SN thickner 615 | SAN NOPCO UMITED | 0.20 | 0.26 | 0.25 | 0.25 | 0.25 | 0.26 | 0.20 | 0.20 | 0.21 | 0.21 | 0.20 | 0.20 | 0.22 | 0.23 | 0.24 | 0.27 |
| Antifungal agent/ algicide | MONICIDE AZ | Japan EnviroChemicals.ltd. | 0.50 | 0.66 | 0.64 | 0.64 | 0.63 | 0.66 | 0.51 | 0.51 | 0.52 | 0.52 | 0.51 | 0.51 | 0.54 | 0.57 | 0.60 | 0.50 |
| Deionized water | | - | 3.95 | 5.20 | 5.04 | 5.04 | 4.95 | 5.20 | 3.99 | 4.00 | 4.10 | 4.07 | 4.04 | 4.02 | 4.28 | 4.50 | 4.71 | 1.95 |
| Defoamer | AGITAN 295 | MUNZING CHEMIE | 0.20 | 0.26 | 0.25 | 0.25 | 0.25 | 0.26 | 0.20 | 0.20 | 0.21 | 0.21 | 0.20 | 0.20 | 0.22 | 0.23 | 0.24 | 0.20 |
| Total | | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |

The figures in the table are shown in parts by weight

**[Table 4]**

| Formulation 2 of base material (I) | | | | | | | | | | | | | |
|---|---|---|---|---|---|---|---|---|---|---|---|---|---|
| Use | Material | Maker | W-3 | W-4 | Bk-6 | Bk-7 | N7-6 | N7-7 | N7-8 | N7-9 | N7-10 | N7-11 | SV-1 |
| (A2) | MB-1 | | | 29.00 | | | | | | | | | |
| | MB-2 | | 29.00 | | | | | | | | | | |
| | LIOFAST S698 Black | TOYOCHEM Co., Ltd. | | | 9.50 | | 1.33 | | 1.56 | 1.71 | 1.86 | 2.09 | |
| | PA0724 Black | TOYOCHEM Co., Ltd. | | | | 20.00 | | 3.00 | | | | | |
| | Aluminum paste EMR-D5660 | TOYO ALUMINUM K.K. | | | | | | | | | | | 5.00 |
| (A1) | A1-2 | | 60.00 | 60.00 | 76.48 | 67.61 | 62.31 | 61.14 | 62.70 | 62.97 | 63.23 | 63.63 | 80.28 |
| Film-forming aid | EHG | Nippon Nyukazai Co., Ltd. | 6.00 | 6.00 | 7.65 | 6.76 | 6.23 | 6.11 | 6.27 | 6.30 | 6.32 | 6.36 | 8.03 |
| Thickener | Rheolate 244 | Elementis plc | 0.25 | 0.25 | 0.32 | 0.28 | 0.26 | 0.25 | 0.26 | 0.26 | 0.26 | 0.27 | 0.33 |
| | SN thickner 615 | SAN NOPCO LIMITED | 0.25 | 0.25 | 0.32 | 0.28 | 0.26 | 0.25 | 0.26 | 0.26 | 0.26 | 0.27 | 0.33 |
| Antifungal agent/ algicide | MONICIDE AZ | Japan EnviroChemicals.ltd. | 0.50 | 0.50 | 0.64 | 0.56 | 0.52 | 0.51 | 0.52 | 0.52 | 0.53 | 0.53 | 0.67 |
| Deionized water | | - | 3.80 | 3.80 | 4.84 | 4.28 | 28.89 | 28.52 | 28.22 | 27.77 | 27.32 | 26.65 | 5.08 |
| Defoamer | AGITAN 295 | MUNZING CHEMIE | 0.20 | 0.20 | 0.25 | 0.23 | 0.21 | 0.20 | 0.21 | 0.21 | 0.21 | 0.21 | 0.27 |
| Total | | | 100.00 | 100.00 | 100.00 | 100.00 | 100.00 | 100.00 | 100.00 | 100.00 | 100.00 | 100.00 | 100.00 |

The figures in the table are shown in parts by weight

**[Table 5]**

| Formulation 3 of base material (I) | | | | | | | |
|---|---|---|---|---|---|---|---|
| Use | Material | Maker | HP-1 | HP-2 | HP-3 | HP-4 | HP-5 |
| (A1) | A1-3 | | 55.00 | 66.67 | 28.84 | 49.28 | 49.28 |
| Dispersant | Olfine PD-201 | Nissin Chemical Industry Co., Ltd. | 0.65 | 0.79 | 0.34 | 0.58 | 0.58 |
| (A2) | MB-1 | | 7.00 | 8.48 | 3.67 | 6.27 | 6.27 |
| | Glass Bubbles IM-30K | Sumitomo 3M Limited | 27.50 | | | | |
| | Glass Bubbles S22 | Sumitomo 3M Limited | | 12.12 | | | |
| | Whiton SB Red | SHIRAISHI CALCIUM KAISHA, LTD. | | | 61.98 | 34.94 | 17.47 |
| | HIGILITE H-42M | SHOWA DENKO K.K. | | | | | 17.47 |
| Antifreezing agent | Propylene glycol | | 1.50 | 1.82 | 0.79 | 1.34 | 1.34 |
| Film-formine aid | CS-12 | JNC Corporation | 1.50 | 1.82 | 0.79 | 1.34 | 1.34 |
| Thickener | Rheolate 244 | Elementic Plc | 0.20 | 0.24 | 0.10 | 0.18 | 0.18 |
| | Rheolate 288 | Elementic Plc | | | | 0.11 | 0.11 |
| | SN thiokener 615 | SAN NOPCO LIMITED | 0.20 | 0.24 | 0.10 | 0.18 | 0.18 |
| Antifungal agent/ algicide | MONICIDE AH | Japan EnviroChemioals.ltd. | 0.50 | 0.61 | 0.26 | 0.45 | 0.45 |
| Deionized water | | - | 5.65 | 6.85 | 2.96 | 5.06 | 5.06 |
| Defoamer | ADEKA NATE B-988 | ADEKA CORPORATION | 0.30 | 0.36 | 0.16 | 0.27 | 0.27 |
| Total | | | 100.00 | 100.00 | 100.00 | 100.00 | 100.00 |

The figures in the table are shown in parts by weight.

LIOFAST SF696 Black: Heat-shielding pigment water dispersion (containing perylene black (Pigment Black 31)) available from TOYOCHEM CO., LTD.
LIOFAST SF698 Black: Heat-shielding pigment water dispersion (containing bismuth vanadate (Pigment Yellow 184), quinacridone (Pigment Violet 19), β crystals of copper phthalocyanine (Pigment Blue 15:3), and barium sulphate (Pigment White 21)) available from TOYOCHEM CO., LTD.
MF-4581 Black: Heat-shielding pigment water dispersion (containing a composite copper-bismuth oxide) available from Dainichiseika Color & Chemicals Mfg. Co., Ltd.
AF Black E-40: Heat-shielding pigment water dispersion (containing azomethine black) available from Dainichiseika Color & Chemicals Mfg. Co., Ltd.
LIOFAST M-232A Black: Pigment water dispersion (containing carbon black (Pigment Black 7)) available from TOYOCHEM CO., LTD.
Lumiflon FE-4300: Fluororesin emulsion available from ASAHI GLASS CO., LTD.
EHG: Ethylene glycol mono (2-ethylhexyl) available from Nippon Nyukazai Co., Ltd.
CS-12: 2,2,4-Trimethyl-1,3-pentanediol monoisobutyrate available from JNC Corporation
PA0724 Black: Heat-shielding pigment water dispersion (containing a bismuth pigment) available from TOYOCHEM CO., LTD.
Aluminum paste EMR-D5660: Aluminum paste available from TOYO ALUMINUM K.K.
Olfine PD-201: Dispersant (containing an acetylene glycol surfactant and an anionic surfactant) available from Nissin Chemical Industry Co., Ltd.
Glass Bubbles IM-30K: Hollow glass beads (real density: 0.60 g/cm³, 50% particle size: 16 µm) available from Sumitomo 3M Limited
Glass Bubbles S22: Hollow glass beads (real density: 0.22 g/cm³, 50% particle size: 35 µm) available from Sumitomo 3M Limited
Whiton SB Red: Ground calcium carbonate (average particle size: 1.80 µm) available from SHIRAISHI CALCIUM KAISHA, LTD.
HIGILITE H-42M: Aluminum hydroxide (median particle size: 1.0 µm) available from SHOWA DENKO K.K.

### [Preparation example of auxiliary agent (II)]

Raw materials shown in Table 6 were introduced in order from top to bottom into a vessel equipped with a stirrer, a reflux condenser, and a nitrogen gas introduction pipe. After completion of the introduction, the mixture was heated to 40°C and stirred for 60 minutes to give a stain resistance-imparted composition (QA-1 to QA-7, QB-1 and QB-2).

**[Table 6]**

| Formulation of auxiliary agent (II) | | | | | | | | | | | |
|---|---|---|---|---|---|---|---|---|---|---|---|
| Use | Material | Maker | QA-1 | QA-2 | QA-3 | QA-4 | QA-5 | QA-6 | QA-7 | QB-1 | QB-2 |
| Solvent | Proglyde DMM | The Dow Chemical Company | 10.84 | 1.84 | 1.84 | 11.29 | 16.28 | 13.76 | 3.68 | 11.73 | 6.73 |
| | CS-12 | JNC Corporation | 16.71 | 16.71 | 16.71 | 16.71 | 2.80 | 2.80 | 2.80 | | |
| (B5) | CARBODILITE V-04B | Nissinbo Chemical Inc. | 9.00 | 9.00 | 9.00 | 9.00 | 2.80 | 2.80 | 2.80 | | |
| | Bayhydur 401-70 | Sumika Bayer Urethane Co., Ltd. | | | | | 16.10 | 16.10 | 16.10 | | |
| Surfactant | Enviro Gem AD-01 | Nissin Chemical Industry Co., Ltd. | 4.50 | 4.50 | 4.50 | 4.50 | | | | 4.17 | 4.17 |
| | IONET DO-600 | Sanyo Chemical Industries, Ltd. | | | | | 8.40 | 8.40 | 8.40 | 15.00 | 15.00 |
| | UNILUB 70MO-10SB | NOF Corporation | 13.50 | 13.50 | 13.50 | 13.50 | | | | | |
| (B4) | Dynasylan 6498 | Evonik Degussa Japan | | | 22.50 | | | | 21.00 | | 10.00 |
| (B1) | Silicate 40 | Tama Chemicals Co., Ltd. | 45.00 | 45.00 | 22.50 | 45.00 | 42.00 | 42.00 | 21.00 | 50.00 | 40.00 |
| (B2) | dibutyltin bis(dodecylmercaptide) | | 0.45 | 0.45 | 0.45 | | 1.40 | 1.40 | 1.40 | | |
| | 2-Ethylhexyl acid phosphate | | | | | | | | | 10.00 | 10.00 |
| | n-Butyldiethanolamine | | | | | | | | | 9.10 | 9.10 |
| Coupling agent | SILA-ACE S340 | JNC Corporation | | | | | 9.10 | 9.10 | 9.10 | | |
| Retardant | Dodecyl mercaptan | - | | | | | 1.12 | 1.12 | 1.12 | | |
| (B3) | TINUVIN 123 | BASF JAPAN Ltd. | | 4.50 | 4.50 | | | 2.52 | 6.30 | | 2.50 |
| | Hostavin 3058 Liq. | Clariant Japan K.K. | | 4.50 | 4.50 | | | | 6.30 | | 2.50 |
| Total | | | 100.00 | 100.00 | 100.00 | 100.00 | 100.00 | 100.00 | 100.00 | 100.00 | 100.00 |

The figures in the table are shown in parts by weight

CS-12: 2,2,4-Trimethyl-1,3-pentanediol monoisobutyrate available from JNC Corporation
Proglyde DMM: Dipropylene glycol dimethyl ether available from The Dow Chemical Company
CARBODILITE V-04B: Polycarbodiimide available from Nisshinbo Chemical Inc.
Bayhydur 401-70: Water-dispersible isocyanate (active ingredient: 70%) available from Sumika Bayer Urethane Co., Ltd.
Enviro Gem AD-01: Acetylene glycol surfactant analog available from Nissin Chemical Industry Co., Ltd.
IONET DO-600: Polyethylene glycol dioleyl ester available from Sanyo Chemical Industries, Ltd.
UNILUB 70MO-10SB: Nonionic surfactant available from NOF CORPORATION
Dynasylan 6498: Hydrolysis condensate of vinylsilane (residual silica content: 45%) available from Evonik Degussa Japan
Silicate 40: Partial hydrolysis condensate of tetraethoxysilane (residual silica content: 40%) available from Tama Chemicals Co., Ltd.
SILA-ACE S340: Ketimine silane coupling agent available from JNC Corporation
TINUVIN 123: Hindered amine light stabilizer available from BASF JAPAN Ltd.
Hostavin 3058 Liq.: Hindered amine light stabilizer available from Clariant Japan K.K.

### Weather resistance test 1

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and Parathermo Shield Topcoat White and, if appropriate, the auxiliary agent (II) were mixed and stirred, and the resulting composition was applied to the substrate once using an applicator in such a manner that the wet film thickness was about 250 µm, and then dried at room temperature for seven days. This test board was placed in a xenon arc lamp-type accelerated weathering test apparatus (HYBRID EXPOSURE SYSTEM: Atlas Weather-Ometer Ci4000 + HE system, available from TOYO SEIKI SEISAKUSHO, LTD.) provided with the hydrogen peroxide spraying function for 345 hours. Gloss retention was calculated based on the gloss levels at an incident angle of 60° measured before and after the test using a gloss meter "Multi-Gloss268" available from Konica Minolta, Inc.

### Lightness change 1 during outdoor exposure

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and Parathermo Shield Topcoat White and, if appropriate, the auxiliary agent (II) were mixed and stirred, and the resulting composition was applied to the substrate once using an applicator in such a manner that the wet film thickness was about 250 µm, and then dried at room temperature for seven days. This test board was horizontally positioned and subjected to outdoor exposure for six months in Settsu city, Osaka. Before and after the exposure, the lightness defined by the L*a*b* color system was measured using a colorimeter (CR-300, available from Konica Minolta, Inc.). Lightness retention was calculated from the measured values.

### Solar reflectance change 1 during outdoor exposure

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and Parathermo Shield Topcoat White and, if appropriate, the auxiliary agent (II) were mixed and stirred, and the resulting composition was applied to the substrate once using an applicator in such a manner that the wet film thickness was about 250 µm, and then dried at room temperature for seven days. This test board was horizontally positioned and subjected to outdoor exposure for six months in Settsu city, Osaka. Before and after the exposure, the spectral reflectance of the test board in a wavelength range from 300 to 2500 nm was measured using an ultraviolet/visible/near infrared spectrophotometer (Solid Spec-3700, available from Shimadzu Corporation). Solar reflectances in the near infrared range (780 to 2500 nm) and whole wavelength range (300 to 2500 nm) were calculated from the measured values in conformity with JIS K5602:2008 (Determination of reflectance of solar radiation by paint film).

Reflectance retention was also calculated from the solar reflectances before and after the exposure.

**[Table 7]**

| Coating film properties | | | | | | | | | | | | | | | | | | |
|---|---|---|---|---|---|---|---|---|---|---|---|---|---|---|---|---|---|---|
| Use | | Sample | Ex. 1 | Ex. 2 | Ex. 3 | Ex. 4 | Ex. 5 | Ex. 6 | Ex. 7 | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
| Base material (I) | | W-1 | 100 | | | | | | | 100 | | | | | | | 100 | |
| | | N8-3 | | 100 | | | | | | | 100 | | | | | | | |
| | | N7-3 | | | 100 | | | | | | | 100 | | | | | | |
| | | N6-3 | | | | 100 | | | | | | | 100 | | | | | |
| | | N5-3 | | | | | 100 | | | | | | | 100 | | | | |
| | | N4-3 | | | | | | 100 | | | | | | | 100 | | | |
| | | Bk-3 | | | | | | | 100 | | | | | | | 100 | | |
| Auxiliary agent (II) | | QA-1 | 10 | 10 | 10 | 10 | 10 | 10 | 10 | | | | | | | | | |
| | | QA-4 | | | | | | | | | | | | | | | 10 | |
| Commercial product | | Parathermo Shield Topcoat White | | | | | | | | | | | | | | | | 100 |
| Weather resistance 1 | | Gloss retention (%) | - | - | 54 | - | - | - | - | - | - | - | 31 | - | - | - | 33 | 20 |
| Lightness 1 (*L**) | | Before exposure | 95 | 79 | 70 | 59 | 49 | 40 | 20 | 95 | 78 | 70 | 59 | 49 | 40 | 20 | 95 | 96 |
| | | After 6 months of exposure | 93 | 78 | 70 | 60 | 50 | 41 | 22 | 88 | 75 | 67 | 57 | 48 | 40 | 23 | 90 | 86 |
| | | Retention rate | 99 | 99 | 100 | 100 | 101 | 102 | 112 | 93 | 95 | 96 | 97 | 98 | 100 | 111 | 95 | 90 |
| Solar reflectance 1 (%) | Near infrared range | Before exposure | 87 | 87 | 85 | 83 | 81 | 77 | 69 | 87 | 87 | 87 | 84 | 80 | 77 | 69 | 87 | 78 |
| | | After 6 months of exposure | 83 | 83 | 82 | 80 | 76 | 74 | 64 | 77 | 76 | 76 | 72 | 70 | 65 | 58 | 77 | 67 |
| | | Retention rate | 96 | 96 | 96 | 97 | 94 | 95 | 94 | 88 | 87 | 88 | 86 | 87 | 84 | 84 | 89 | 86 |
| | Whole wavelength range | Before exposure | 85 | 70 | 63 | 55 | 49 | 43 | 34 | 85 | 70 | 63 | 55 | 48 | 43 | 34 | 85 | 82 |
| | | After 6 months of exposure | 82 | 68 | 61 | 53 | 46 | 41 | 33 | 73 | 61 | 55 | 48 | 43 | 37 | 30 | 75 | 67 |
| | | Retention rate | 96 | 97 | 97 | 97 | 95 | 96 | 95 | 86 | 88 | 88 | 87 | 89 | 86 | 87 | 88 | 82 |

The figures in the table are shown in parts by weight

In each of Examples 1 to 7 varying in lightness from 95 to 20, the reflectance retention was 94% or higher, which indicates good reflectance retention properties. In contrast, in each of Comparative Examples 1 to 7 having the same lightness level but not using any of (B1) an organosilicate and/or a modified product thereof and (B2) a curing catalyst that promotes a hydrolysis/condensation reaction of an alkoxysilyl group, the reflectance retention was 90% or lower.

Moreover, the reflectance retention was similarly 90% or lower in Comparative Example 8 using (B1) an organosilicate and/or a modified product thereof alone, and Comparative Example 9 using a commercial heat-shielding coating material.

**[Table 8]**

| Coating film properties | | | | | | | | | | | | | | |
|---|---|---|---|---|---|---|---|---|---|---|---|---|---|---|
| Use | | Sample | Com.Ex.10 | Ex. 8 | Ex. 9 | Ex. 10 | Ex. 11 | Ex 12 | Ex 13 | Ex. 14 | Ex. 15 | Ex. 16 | Ex. 17 | Ex. 18 |
| Base material (I) | | Bk-1 | 100 | | | | | | | | | | | |
| | | Bk-2 | | 100 | | | | | | | | | | |
| | | Bk-4 | | | 100 | | | | | | | | | |
| | | Bk-5 | | | | 100 | | | | | | | | |
| | | N7-2 | | | | | 100 | | | | | | | |
| | | N7-3 | | | | | | | | 100 | 100 | 100 | 100 | |
| | | N7-4 | | | | | | 100 | | | | | | |
| | | N7-5 | | | | | | | 100 | | | | | |
| | | W-2 | | | | | | | | | | | | 100 |
| Auxiliary agent (II) | | QA-1 | 10 | 10 | 10 | 10 | 10 | 10 | 10 | | | | | |
| | | QA-2 | | | | | | | | 10 | | | | |
| | | QA-3 | | | | | | | | | 10 | | | 10 |
| | | QA-5 | | | | | | | | | | 7 | | |
| | | QB-1 | | | | | | | | | | | 7 | |
| Weather resistance 1 | | Gloss retention (%) | - | - | - | - | - | - | - | 59 | 62 | 55 | 54 | 75 |
| Lightness 1 (*L∗*) | | Before exposure | 6 | 14 | 18 | 9 | 71 | 71 | 68 | 70 | 70 | 70 | 70 | 70 |
| | | After 6 months of exposure | 12 | 17 | 22 | 14 | 71 | 76 | 73 | 70 | 70 | 70 | 69 | 70 |
| | | Retention rate | 221 | 124 | 124 | 157 | 100 | 108 | 107 | 100 | 100 | 100 | 99 | 100 |
| Solar reflectance 1 (%) | Near infrared range | Before exposure | 4 | 72 | 55 | 72 | 87 | 82 | 87 | 85 | 85 | 85 | 85 | 85 |
| | | After 6 months of exposure | 4 | 68 | 51 | 68 | 85 | 78 | 83 | 82 | 83 | 82 | 81 | 83 |
| | | Retention rate | 107 | 94 | 93 | 94 | 97 | 96 | 96 | 96 | 98 | 96 | 95 | 98 |
| | Whole wavelength range | Before exposure | 4 | 41 | 28 | 37 | 67 | 61 | 65 | 63 | 63 | 63 | 63 | 63 |
| | | After 6 months of exposure | 5 | 38 | 26 | 35 | 66 | 63 | 66 | 61 | 60 | 61 | 60 | 61 |
| | | Retention rate | 110 | 93 | 94 | 96 | 97 | 103 | 102 | 97 | 96 | 97 | 96 | 97 |

The figures in the table are shown in parts by weight

In each of Examples 8 to 13 differing in the kind of heat-shielding pigment, the reflectance retention was 93% or higher. In Comparative Example 10 using carbon black, which is not a heat-shielding pigment, as a pigment, the reflectance retention was high; however, since the original reflectance was 40% or lower, such a coating material cannot be recognized as a heat-shielding coating material. In each of Examples 14 to 18 differing in the formulation of auxiliary agent (II), the reflectance retention was 95% or higher. Moreover, those using (B3) a hindered amine light stabilizer (HALS) having a logarithm (pKa) of the reciprocal of acid dissociation constant of 7 or less or (B4) an organosilane and/or a hydrolysis condensate thereof exhibited improved weather resistance compared to those not using them.

**[Table 9]**

| Coating film properties | | | | | | | | | | | | | | | | | | | | |
|---|---|---|---|---|---|---|---|---|---|---|---|---|---|---|---|---|---|---|---|---|
| Use | | Sample | Ex. 19 | Com. Ex. 11 | Ex. 20 | Ex. 21 | Ex. 22 | Com. Ex. 12 | Ex. 23 | Ex. 24 | Ex. 25 | Com. Ex. 13 | Ex. 26 | Com. Ex. 14 | Ex. 27 | Com. Ex. 15 | Ex. 28 | Com. Ex. 16 | Ex. 29 | Com. Ex. 17 |
| Base material (I) | | W-3 | 14 | 14 | | | | | | | | | | | | | | | | |
| | | W-4 | | | 14 | 14 | 14 | 14 | | | | | | | | | | | | |
| | | N7-6 | | | | | | | 14 | 14 | 14 | 14 | | | | | | | | |
| | | N7-7 | | | | | | | | | | | 14 | 14 | | | | | | |
| | | N7-8 | | | | | | | | | | | | | 14 | 14 | | | | |
| | | N7-9 | | | | | | | | | | | | | | | 14 | 14 | | |
| | | N7-10 | | | | | | | | | | | | | | | | | 14 | 14 |
| Auxiliary agent (II) | | QA-6 | 1 | | 1 | | | | 1 | | | | 1 | | 1 | | 1 | | 1 | |
| | | QA-7 | | | | 1 | | | | 1 | | | | | | | | | | |
| | | QB-2 | | | | | 1 | | | | 1 | | | | | | | | | |
| Weather resistance 1 | | Gloss retention (%) | 94 | 70 | 59 | 65 | 61 | 35 | 57 | 65 | 58 | 33 | 62 | 35 | 75 | 53 | 85 | 60 | 92 | 70 |
| Lightness 1 (*L∗*) | | Before exposure | 96 | 96 | 94 | 94 | 94 | 94 | 70 | 70 | 70 | 71 | 71 | 71 | 71 | 71 | 71 | 71 | 71 | 71 |
| | | After 6 months of exposure | 95 | 87 | 93 | 92 | 92 | 85 | 70 | 70 | 69 | 65 | 70 | 65 | 71 | 64 | 70 | 65 | 71 | 63 |
| | | Retention rate | 99 | 90 | 99 | 98 | 97 | 90 | 100 | 99 | 98 | 92 | 99 | 92 | 100 | 90 | 99 | 91 | 100 | 89 |
| Solar reflectance 1 (%) | Near infrared range | Before exposure | 83 | 82 | 86 | 85 | 86 | 84 | 84 | 83 | 84 | 83 | 83 | 82 | 84 | 82 | 82 | 82 | 80 | 80 |
| | | After 6 months of exposure | 79 | 72 | 83 | 82 | 83 | 73 | 81 | 79 | 81 | 72 | 81 | 70 | 80 | 69 | 80 | 69 | 78 | 68 |
| | | Retention rate | 96 | 88 | 97 | 97 | 97 | 87 | 96 | 95 | 96 | 86 | 97 | 85 | 96 | 84 | 97 | 84 | 97 | 85 |
| | Whole wavelength range | Before exposure | 85 | 85 | 84 | 83 | 84 | 83 | 62 | 62 | 62 | 62 | 62 | 62 | 63 | 62 | 62 | 62 | 61 | 61 |
| | | After 6 months of exposure | 83 | 75 | 82 | 81 | 82 | 72 | 60 | 59 | 60 | 54 | 60 | 53 | 61 | 52 | 60 | 52 | 60 | 51 |
| | | Retention rate | 97 | 88 | 97 | 97 | 97 | 87 | 96 | 96 | 96 | 87 | 96 | 86 | 97 | 84 | 97 | 83 | 98 | 83 |

The figures in the table are shown in parts by weight

In each of Examples 19 to 29 varying in the combination of heat-shielding pigments, the reflectance retention was 95% or higher, which indicates good reflectance retention properties. In contrast, in each of Comparative Examples 11 to 17 using the same combination of heat-shielding pigments but not using any of (B1) an organosilicate and/or a modified product thereof and (B2) a curing catalyst that promotes a hydrolysis/condensation reaction of an alkoxysilyl group, the reflectance retention was 90% or lower. Moreover, the combined use with titanium dioxide surface-treated with silicon dioxide, aluminum oxide, and zirconium dioxide improved weather resistance (when comparing Example 23 with Examples 24 to 29).

**[Table 10]**

| Coating film properties | | | | | | | | | | | | |
|---|---|---|---|---|---|---|---|---|---|---|---|---|
| Use | | Sample | Ex. 30 | Ex. 31 | Ex. 32 | Com. Ex. 18 | Ex. 33 | Com. Ex. 19 | Ex. 34 | Com. Ex. 20 | Ex. 35 | Com. Ex. 21 |
| Base material (I) | | Bk-6 | 14 | 14 | 14 | 14 | | | | | | |
| | | Bk-7 | | | | | 14 | 14 | | | | |
| | | N7-11 | | | | | | | 14 | 14 | | |
| | | SV-1 | | | | | | | | | 14 | 14 |
| Auxiliary agent (II) | | QA-6 | 1 | | | | 1 | | 1 | | 1 | |
| | | QA-7 | | 1 | | | | | | | | |
| | | QB-2 | | | 1 | | | | | | | |
| Lightness 1 (*L∗*) | | Before exposure | 19 | 18 | 18 | 19 | 10 | 9 | 67 | 67 | 62 | 62 |
| | | After 6 months of exposure | 20 | 19 | 19 | 19 | 10 | 10 | 67 | 60 | 62 | 54 |
| | | Retention rate | 107 | 103 | 103 | 102 | 99 | 114 | 100 | 89 | 101 | 87 |
| Solar reflectance 1 (%) | Near infrared range | Before exposure | 65 | 66 | 63 | 63 | 24 | 24 | 65 | 65 | 61 | 61 |
| | | After 6 months of exposure | 62 | 63 | 60 | 53 | 23 | 20 | 62 | 55 | 60 | 53 |
| | | Retention rate | 96 | 95 | 95 | 85 | 98 | 83 | 96 | 85 | 98 | 87 |
| | Whole wavelength range | Before exposure | 32 | 33 | 32 | 32 | 13 | 13 | 52 | 52 | 61 | 61 |
| | | After 6 months of exposure | 31 | 31 | 30 | 27 | 13 | 11 | 50 | 44 | 60 | 53 |
| | | Retention rate | 96 | 95 | 94 | 86 | 98 | 84 | 97 | 85 | 98 | 87 |

The figures in the table are shown in parts by weight

In each of Examples 30 to 35 varying in the kind of heat-shielding pigment, the reflectance retention was 94% or higher, which indicates good reflectance retention properties. In contrast, in each of Comparative Examples 18 to 21 using the same combination of heat-shielding pigments but not using any of (B1) an organosilicate and/or a modified product thereof and (B2) a curing catalyst that promotes a hydrolysis/condensation reaction of an alkoxysilyl group, the reflectance retention was 90% or lower.

### Weather resistance test 2

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and, if appropriate, the auxiliary agent (II) were mixed and stirred, and the resulting composition was applied to the substrate once in such a manner that the wet film thickness was about 1 mm, and then dried at room temperature for seven days. This test board was placed in a xenon arc lamp-type accelerated weathering test apparatus (Atlas Weather-Ometer Ci4000) for 1000 hours. Color difference ΔE* was calculated based on the CIE L*a*b* values measured before and after the test using a colorimeter (CR-300, available from Konica Minolta, Inc.).

### Lightness change 2 during outdoor exposure

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and, if appropriate, the auxiliary agent (II) were mixed and stirred, and the resulting composition was applied to the substrate once in such a manner that the wet film thickness was about 1 mm, and then dried at room temperature for seven days. This test board was horizontally positioned and subjected to outdoor exposure for six months in Settsu city, Osaka. Before and after the exposure, the lightness defined in the L*a*b* color system was measured using a colorimeter (CR-300, available from Konica Minolta, Inc.). Lightness retention was calculated from the measured values.

### Solar reflectance change 2 during outdoor exposure

ESCO (two-pack type solvent-based epoxy resin undercoat material, available from KANSAI PAINT CO., LTD.) was applied to an aluminum board and then cured at room temperature for one day. Then, Parathermo Shield Topcoat White (aqueous heat-shielding coating material, available from NIHON TOKUSHU TORYO CO., LTD.) was sprayed thereto once and cured at room temperature for one day to give a substrate for testing. The prepared base material (I) and, if appropriate, the auxiliary agent (II) were mixed and stirred, and the resulting composition was applied to the substrate once in such a manner that the wet film thickness was about 1 mm, and then dried at room temperature for seven days. This test board was positioned to face south at 30° and subjected to outdoor exposure for six months in Settsu city, Osaka. Before and after the exposure, the spectral reflectance of the test board in a wavelength range from 300 to 2500 nm was measured using an ultraviolet/visible/near infrared spectrophotometer (Solid Spec-3700, available from Shimadzu Corporation). Solar reflectances in the near infrared range (780 to 2500 nm) and whole wavelength range (300 to 2500 nm) were calculated from the measured values in conformity with JIS K5602:2008 (Determination of reflectance of solar radiation by paint film).

Reflectance retention was also calculated from the solar reflectances before and after the exposure.

**[Table 11]**

| Coating film properties | | | | | | | | | | | | |
|---|---|---|---|---|---|---|---|---|---|---|---|---|
| Use | | Sample | Ex. 36 | Com. Ex. 22 | Ex. 37 | Com. Ex. 23 | Ex. 38 | Com. Ex. 24 | Ex. 39 | Com. Ex. 25 | Ex. 40 | Com. Ex. 26 |
| Base material (I) | | HP-1 | 100 | 100 | | | | | | | | |
| | | HP-2 | | | 100 | 100 | | | | | | |
| | | HP-3 | | | | | 100 | 100 | | | | |
| | | HP-4 | | | | | | | 100 | 100 | | |
| | | HP-5 | | | | | | | | | 100 | 100 |
| Auxiliary agent (II) | | QB-2 | 10.0 | | 12.0 | | 3.0 | | 5.0 | | 5.0 | |
| Weather resistance 2 | | (*ΔE**) | 0.3 | 1.0 | 0.4 | 1.1 | 0.7 | 1.4 | 0.5 | 1.2 | 0.4 | 1.2 |
| Lightness 2 (*L∗*) | | Before exposure | 96 | 96 | 96 | 96 | 93 | 93 | 94 | 94 | 96 | 95 |
| | | After 6 months of exposure | 92 | 85 | 92 | 84 | 91 | 83 | 91 | 79 | 92 | 80 |
| | | Retention rate | 95 | 88 | 96 | 87 | 98 | 90 | 97 | 84 | 96 | 84 |
| Solar reflectance 2 (%) | Near infrared range | Before exposure | 90 | 90 | 89 | 89 | 81 | 81 | 85 | 84 | 84 | 83 |
| | | After 6 months of exposure | 81 | 74 | 80 | 74 | 77 | 65 | 78 | 65 | 79 | 64 |
| | | Retention rate | 90 | 82 | 90 | 83 | 95 | 80 | 92 | 77 | 94 | 77 |
| | Whole wavelength | Before exposure | 88 | 88 | 87 | 87 | 79 | 79 | 83 | 82 | 83 | 83 |
| | | After 6 months of exposure | 79 | 70 | 78 | 69 | 74 | 61 | 74 | 60 | 75 | 61 |
| | | Retention rate | 90 | 80 | 90 | 80 | 93 | 77 | 90 | 73 | 91 | 74 |

The figures in the table are shown in parts by weight

In each of Examples 36 to 40 using hollow glass beads, ground calcium carbonate, and/or aluminum hydroxide as heat-shielding pigment and having a large film thickness, the reflectance retention was 90% or higher, which indicates good reflectance retention properties. In contrast, in each of Comparative Examples 22 to 26 using the same combination of heat-shielding pigments but not using any of (B1) an organosilicate and/or a modified product thereof, (B2) a curing catalyst that promotes a hydrolysis/condensation reaction of an alkoxysilyl group, (B3) a hindered amine light stabilizer (HALS) having a logarithm (pKa) of the reciprocal of acid dissociation constant of 7 or less, and (B4) an organosilane and/or a hydrolysis condensate thereof, the reflectance retention was 80% or lower and a great color change (ΔE*) was also observed in the weather resistance test.

### INDUSTRIAL APPLICABILITY

Aqueous coating compositions according to the present invention can be used for the coating of various objects, such as architecture (e.g. buildings, detached houses, apartment houses, factory buildings, hospitals, schools, gas stations), structures (e.g. bridges, civil structures, plants, marine structures, floodgates, steel towers, large pipes, pools), building materials (e.g. sashes, fittings, various boards, inorganic building materials), ships, metal products (e.g. PCM, metal furniture, containers, guard rails, bicycle members, fences, food cans, drum cans, cylinders, gas appliances, kerosene heaters), road vehicles (e.g. passenger cars, trucks, buses, motorbikes), electric machines (e.g. household electrical appliances, heavy electric machines, electronic machines, office machineries, communication devices, measuring instruments, freezers, lighting fixtures, vending machines, computer-related devices), machineries (e.g. industrial machines, agricultural machines, construction machines, railway vehicles, aircrafts), and wood products (e.g. plywood, furniture, musical instruments).

## Claims

1. A coating composition for obtaining a coating film having a spectral reflectance of 40% or higher in a near infrared wavelength range from 780 to 2500 nm by applying the coating composition,
the coating composition comprising:
(A1) a water-soluble and/or water-dispersible resin;
(A2) a heat-shielding pigment comprising infrared reflective powders and at least one of infrared transparent powders and hollow particles;
(B1) an organosilicate and/or a modified product of the organosilicate; and
(B2) a curing catalyst that promotes a hydrolysis/condensation reaction of an alkoxysilyl group.

2. The coating composition according to claim 1,
which is a two-pack type or multicomponent type coating composition prepared by mixing a base material (I) and an auxiliary agent (II) before use, the base material (I) containing the (A1) water-soluble and/or water-dispersible resin and the (A2) heat-shielding pigment, the auxiliary agent (II) containing the (B1) organosilicate and/or modified product of the organosilicate and the (B2) curing catalyst that promotes a hydrolysis/condensation reaction of an alkoxysilyl group.

3. The coating composition according to claim 1 or 2, further comprising
(B3) a hindered amine light stabilizer (HALS) having a logarithm (pKa) of the reciprocal of acid dissociation constant of 7 or less.

4. The coating composition according to any one of claims 1 to 3, further comprising
(B4) an organosilane represented by Formula (1) and/or a hydrolysis condensate of the organosilane:
Si(R²)ₙ(OR¹)₄₋ₙ (1)
wherein R¹s are the same as or different from each other and each represent a C1-C4 alkyl group; R²(s), which may be the same as or different from each other, each represents a substituted or unsubstituted C2-C8 organic group; and n represents 1 or 2.

5. The coating composition according to claim 4,
wherein a combined amount of (B4) organosilane and/or condensate thereof and (B1) organosilicate and/or modified product thereof is 2 to 40 parts by weight per 100 parts by weight of total solids of (A1) water-soluble and/or water-dispersible resin.

6. The coating composition according to any one of claims 1 to 5,
wherein the entire or part of the (A1) water-soluble and/or water-dispersible resin is an alkoxysilyl group-containing acrylic resin.

7. The coating composition according to any one of claims 1 to 6, further comprising
(B5) a water-soluble and/or water-dispersible curing agent containing a reactive functional group and a hydrophilic group within the molecule.

8. The coating composition according to any one of claims 1 to 7,
wherein the (B2) curing catalyst that promotes a hydrolysis/condensation reaction of an alkoxysilyl group comprises one or two or more catalysts selected from the group consisting of organotin compounds, acid phosphates, and reaction products of an acid phosphate and an amine.

9. The coating composition according to any one of claims 1 to 8, comprising
the hollow particles.

10. A coating film, obtained by applying the coating composition according to any one of claims 1 to 9.

## Patentansprüche

1. Beschichtungszusammensetzung, um einen Beschichtungsfilm zu erhalten, der durch Auftragen der Beschichtungszusammensetzung eine Spektralreflexion von 40 % oder mehr in einem nahinfraroten Wellenlängenbereich von 780 bis 2.500 nm aufweist,
wobei die Beschichtungszusammensetzung umfasst:
(A1) ein wasserlösliches und/oder wasserdispergierbares Harz,
(A2) ein hitzeabschirmendes Pigment, das Infrarot-reflektierende Pulver und wenigstens eines von Infrarot-transparenten Pulvern und hohlen Partikeln umfasst,
(B1) ein Organosilikat und/oder ein modifiziertes Produkt aus Organosilikat und
(B2) einen Aushärtungskatalysator, der eine Hydrolyse-/KondensationsReaktion einer Alkoxysilyl-Gruppe fördert.

2. Beschichtungszusammensetzung nach Anspruch 1,
die eine Zwei-Komponenten- oder eine Mehr-Komponenten-Beschichtungszusammensetzung ist, die vor Verwendung durch Mischen eines Grundmaterials (I) und eines Hilfsstoffes (II) hergestellt ist, wobei das Grundmaterial (I) das (A1) wasserlösliche und/oder wasserdispergierbare Harz und das (A2) hitzeabschirmende Pigment enthält und der Hilfsstoff das (B1) Organosilikat und/oder das modifizierte Produkt aus Organosilikat und den (B2) Aushärtungskatalysator, der eine Hydrolyse-/Kondensations-Reaktion einer Alkoxysilyl-Gruppe fördert, enthält.

3. Beschichtungszusammensetzung nach Anspruch 1 oder 2, ferner umfassend
(B3) einen gehinderten Aminlichtstabilisator (HALS), der einen Logarithmus (pKa) des Kehrwertes der Säuredissoziationskonstante von 7 oder mehr aufweist.

4. Beschichtungszusammensetzung nach einem der Ansprüche 1 bis 3, ferner umfassend
(B4) ein durch die Formel (1) dargestelltes Organosilan und/oder ein Hydrolysekondensat des Organosilans:
Si(R²)ₙ(OR¹)₄₋ₙ (1)
wobei die R¹s gleich oder verschieden voneinander sind und jeweils eine C1-C4 Alkyl-Gruppe darstellen, (die) R²(s), die gleich oder verschieden voneinander sein können, jeweils eine substituierte oder unsubstituierte organische C2-C8 Gruppe darstellen und n 1 oder 2 darstellt.

5. Beschichtungszusammensetzung nach Anspruch 4,
wobei eine kombinierte Menge des (B4) Organosilans und/oder des Kondensats davon und des (B1) Organosilikats und/oder des modifizierten Produktes davon 2 bis 40 Gewichtsanteile je 100 Gewichtsanteile des Gesamtfeststoffs des (A1) wasserlöslichen und/oder wasserdispergierbaren Harzes beträgt.

6. Beschichtungszusammensetzung nach einem der Ansprüche 1 bis 5,
wobei das gesamte oder ein Teil des (A1) wasserlösliche(n) und/oder wasserdispergierbare(n) Harz(es) ein alkoxysilylgruppenhaltiges Acrylharz ist.

7. Beschichtungszusammensetzung nach einem der Ansprüche 1 bis 6, ferner umfassend
(B5) ein wasserlösliches und/oder wasserdispergierbares Aushärtungsmittel, das eine reaktive funktionelle Gruppe und eine hydrophile Gruppe im Molekül enthält.

8. Beschichtungszusammensetzung nach einem der Ansprüche 1 bis 7,
wobei der (B2) Aushärtungskatalysator, der eine Hydrolyse-/Kondensationsreaktion einer Alkoxysilylgruppe fördert, einen oder zwei Katalysator(en) umfasst, die aus der aus zinnorganischen Verbindungen, sauren Phosphaten und Reaktionsprodukten eines sauren Phosphats und eines Amins bestehenden Gruppe ausgewählt ist/sind.

9. Beschichtungszusammensetzung nach einem der Ansprüche 1 bis 8, umfassend die hohlen Partikel.

10. Beschichtungsfilm, der durch Auftragen der Beschichtungszusammensetzung nach einem der Ansprüche 1 bis 9 erhalten ist.

## Revendications

1. Composition de revêtement pour obtenir un film de revêtement ayant un coefficient de réflexion spectrale de 40 % ou supérieur dans un intervalle de longueur d'onde des infrarouges proches de 780 à 2 500 nm par application de la composition de revêtement,
la composition de revêtement comprenant :
(A1) une résine soluble dans l'eau et/ou dispersible dans l'eau ;
(A2) un pigment faisant écran à la chaleur comprenant des poudres réflectives aux infrarouges et au moins une de poudres transparentes aux infrarouges et de particules creuses ;
(B1) un organosilicate et/ou un produit modifié de l'organosilicate ; et
(B2) un catalyseur de durcissement qui promeut une réaction d'hydrolyse/condensation d'un groupe alcoxysilyle.

2. Composition de revêtement selon la revendication 1,
laquelle est une composition de revêtement de type deux paquets ou de type multiconstituant préparée en mélangeant un matériau de base (I) et un agent auxiliaire (II) avant l'utilisation, le matériau de base (I) contenant la (A1) résine soluble dans l'eau et/ou dispersible dans l'eau et le (A2) pigment faisant écran à la chaleur, l'agent auxiliaire (II) contenant le (B1) organosilicate et/ou produit modifié de l'organosilicate et le (B2) catalyseur de durcissement qui promeut une réaction d'hydrolyse/condensation d'un groupe alcoxysilyle.

3. Composition de revêtement selon la revendication 1 ou 2, comprenant de plus
(B3) un stabilisant à la lumière d'amine encombrée (HALS) ayant un logarithme (pKa) de l'inverse de la constante de dissociation d'acide de 7 ou inférieur.

4. Composition de revêtement selon l'une quelconque des revendications 1 à 3, comprenant de plus
(B4) un organosilane représenté par la formule (1) et/ou un condensat d'hydrolyse de l'organosilane :
Si(R²)ₙ(OR¹)₄₋ₙ (1)
où les R¹ sont identiques ou différents les uns des autres et représentent chacun un groupe alkyle en C1-C4 ; les R², qui peuvent être identiques ou différents les uns des autres, représentent chacun un groupe organique en C2-C8 substitué ou non substitué ; et n représente 1 ou 2.

5. Composition de revêtement selon la revendication 4,
dans laquelle une quantité combinée de (B4) organosilane et/ou condensat de celui-ci et de (B1) organosilicate et/ou produit modifié de celui-ci est de 2 à 40 parties en masse pour 100 parties en masse de tous les solides de (A1) résine soluble dans l'eau et/ou dispersible dans l'eau.

6. Composition de revêtement selon l'une quelconque des revendications 1 à 5,
dans laquelle la totalité ou une partie de la (A1) résine soluble dans l'eau et/ou dispersible dans l'eau est une résine acrylique contenant un groupe alcoxysilyle.

7. Composition de revêtement selon l'une quelconque des revendications 1 à 6, comprenant de plus
(B5) un agent durcissant soluble dans l'eau et/ou dispersible dans l'eau contenant un groupe fonctionnel réactif et un groupe hydrophile dans la molécule.

8. Composition de revêtement selon l'une quelconque des revendications 1 à 7,
dans laquelle le (B2) catalyseur de durcissement qui promeut une réaction d'hydrolyse/condensation d'un groupe alcoxysilyle comprend un ou deux ou plusieurs catalyseurs choisis dans le groupe constitué de composés d'organoétain, de phosphates d'acides, et de produits de réaction d'un phosphate d'acide et d'une amine.

9. Composition de revêtement selon l'une quelconque des revendications 1 à 8, comprenant les particules creuses.

10. Film de revêtement, obtenu par application de la composition de revêtement selon l'une quelconque des revendications 1 à 9.
